# FASCICULE DE BREVET EUROPEEN

(11) **EP 3 002 653 B1**
(45) Date de publication et mention de la délivrance du brevet: **21.04.2021**
(21) Numéro de dépôt: 15184560.9
(22) Date de dépôt: 09.09.2015
(51) Int. Cl.: G05B 23/02

(54) **DISPOSITIF ET PROCÉDÉ DE SURVEILLANCE DU FONCTIONNEMENT D'UN SYSTÈME CVCA, ENSEMBLE COMPRENANT UN SYSTÈME CVCA ET UN TEL DISPOSITIF DE SURVEILLANCE, ET PRODUIT PROGRAMME D'ORDINATEUR ASSOCIÉ**
VORRICHTUNG UND VERFAHREN ZUR ÜBERWACHUNG DER FUNKTION EINES HLK-SYSTEMS, ANORDNUNG, DIE EIN SOLCHES HLK-SYSTEM UMFASST, UND EINE SOLCHE ÜBERWACHUNGSVORRICHTUNG UND ENTSPRECHENDES COMPUTERPROGRAMMPRODUKT
DEVICE AND METHOD FOR MONITORING THE OPERATION OF AN HVAC SYSTEM, ASSEMBLY COMPRISING AN HVAC SYSTEM AND SUCH A MONITORING DEVICE, AND RELATED COMPUTER PROGRAM PRODUCT

(30) Priorité: 30.09.2014 FR 1459314
(43) Date de publication de la demande: 06.04.2016
(73) Titulaire: Compagnie Industrielle D'Applications Thermiques, 01350 Culoz (FR)
(72) Inventeur: FALHUN, Carine, 73100 Aix-Les-Bains (FR); RAMEZANI, Sepehr, 69003 Lyon (FR)
(74) Mandataire: Lavoix

(56) Documents cités:
- EP-A2- 1 286 289
- WO-A1-2012/129561
- US-A1- 2012 185 728
- AZAM M S ET AL: "Fault diagnosis in HVAC chillers", IEEE INSTRUMENTATION & MEASUREMENT MAGAZINE, IEEE SERVICE CENTER, PISCATAWAY, NJ, US, vol. 8, no. 3, 1 août 2005 (2005-08-01), pages 24-32, XP011138876, ISSN: 1094-6969

## Description

La présente invention concerne un dispositif de surveillance du fonctionnement d'un système CVCA, un ensemble comprenant un système CVCA et un tel dispositif de surveillance, un procédé de surveillance associé, ainsi qu'un produit programme d'ordinateur apte à mettre en œuvre un tel procédé.

Le dispositif de surveillance comprend des premiers moyens d'acquisition de valeurs de grandeurs mesurées associées au système CVCA, et un module d'estimation, en fonction des valeurs acquises des grandeurs mesurées et à l'aide d'un réseau de neurones, de la valeur d'au moins un paramètre représentatif du fonctionnement du système CVCA, chaque grandeur mesurée étant une variable d'entrée du réseau de neurones et chaque paramètre représentatif étant une variable de sortie du réseau de neurones.

L'invention concerne le domaine des systèmes CVCA, également appelés systèmes HVAC (de l'anglais *Heating, Ventilation and Air Conditioning*), c'est-à-dire des systèmes mettant en œuvre au moins une fonction parmi une fonction de chauffage, une fonction de ventilation, une fonction de traitement de l'air et une fonction de climatisation. Ces systèmes CVCA sont, par exemple, des systèmes aérauliques, c'est-à-dire des systèmes mettant en œuvre notamment un écoulement de l'air.

L'invention concerne notamment la maintenance des systèmes CVCA. La maintenance des systèmes industriels est corrective ou préventive, et l'invention concerne alors plus particulièrement la maintenance préventive des systèmes CVCA.

Par maintenance préventive d'un système, on entend l'ensemble des actions préventives consistant à intervenir sur le système avant qu'une défaillance ne survienne, dans le but de réduire la probabilité d'une panne ou encore la dégradation du fonctionnement du système. La maintenance préventive est du type systématique ou conditionnel. La maintenance préventive systématique regroupe des opérations effectuées périodiquement selon un échéancier prédéfini. La maintenance préventive conditionnelle est, selon la norme AFNOR X-60-010, subordonnée à un type d'événement prédéterminé révélateur de l'état du système. Les opérations de maintenance préventive conditionnelle sont alors réalisées en fonction de relevés, de mesures et de contrôles effectués sur le système considéré.

Par maintenance corrective d'un système, on entend l'ensemble des actions correctives consistant à intervenir sur le système après qu'une défaillance soit survenue. Les actions correctives sont de type palliatif avec un dépannage provisoire du système ou de type curatif avec une réparation du système.

Dans le domaine des systèmes HVAC, on connait du document « Control of Air-Cooled Chiller Condenser Fans Using Clustering Neural Networks » de Henze et al., un dispositif de commande d'un groupe de froid (de l'anglais *Chiller*) mettant en œuvre un réseau de neurones artificiels pour calculer des signaux de commande du groupe de froid. Le réseau de neurones est un réseau à propagation par couches (de l'anglais *feedforward*). Les variables d'entrée du réseau de neurones sont une température d'air extérieur, une capacité de refroidissement d'un évaporateur du groupe de froid, un débit d'un fluide réfrigérant à l'intérieur du groupe de froid, des températures du fluide réfrigérant en différents points de mesure. Les variables de sortie sont un nombre de vitesses prédéterminées d'un ventilateur et une vitesse du ventilateur pour deux circuits de ventilation inclus dans le groupe de froid.

Toutefois, un tel dispositif permet seulement de commander le groupe de froid, et n'est pas adapté pour effectuer une maintenance préventive de ce groupe de froid.

Par ailleurs, la maintenance préventive appliquée aux systèmes HVAC consiste généralement en un ensemble d'opérations effectuées périodiquement, ces opérations comportant des visites d'inspection et des interventions planifiées suivant un échéancier. L'échéancier est défini en fonction d'une périodicité temporelle prédéfinie, ou encore en fonction d'une périodicité d'usage par exemple en fonction d'un nombre d'heures de fonctionnement. L'échéancier des opérations est en outre souvent établi à partir de spécifications des constructeurs et d'un retour d'expérience sur la durée de vie des principaux composants du système HVAC.

EP 1 286 289 A2 et « Fault diagnosis in HVAC chillers » de Azam et al (XP011138876) décrivent chacun un dispositif de surveillance du fonctionnement d'un système CVCA à l'aide d'un réseau de neurones.

US 2012/185728 A1 décrit un système pour la détection et le diagnostic de défauts d'un système CVCA à l'aide d'un réseau bayésien.

Le but de l'invention est alors de proposer un dispositif de surveillance du fonctionnement d'un système CVCA permettant d'effectuer une maintenance préventive du système qui soit plus efficace.

À cet effet, l'invention a pour objet un dispositif de surveillance selon la revendication 1.

Le dispositif de surveillance selon l'invention permet alors de détecter des dérives dans le fonctionnement du système CVCA à l'aide du module d'estimation mettant en œuvre le réseau de neurones artificiels, ces dérives correspondant généralement à un début d'anomalie, puis d'établir la ou les causes les plus probables de la ou des dérives détectées à l'aide du module de diagnostic mettant en œuvre le réseau bayésien. Le dispositif de surveillance selon l'invention permet alors d'effectuer une maintenance préventive efficace du système CVCA.

Selon d'autres aspects avantageux, le dispositif de surveillance est selon l'une quelconque des revendications dépendantes 2 à 9.

L'invention a également pour objet un ensemble selon la revendication 10.

L'invention a également pour objet un procédé de surveillance selon la revendication 11.

L'invention a également pour objet un produit programme d'ordinateur selon la revendication 12.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un système CVCA et d'un dispositif de surveillance dudit système selon un premier mode de réalisation de l'invention, pour lequel le système CVCA est un système de transfert de chaleur, tel qu'une pompe à chaleur ou un groupe de froid,
- la figure 2 est une représentation d'un réseau de neurones artificiels mis en œuvre par un module d'estimation inclus dans le dispositif de surveillance de la figure 1,
- la figure 3 est un organigramme d'un procédé de surveillance selon l'invention,
- la figure 4 est une vue analogue à celle de la figure 1 selon un deuxième mode de réalisation de l'invention, pour lequel le système CVCA est un système de ventilation d'air,
- la figure 5 est une vue analogue à celle de la figure 4 selon une variante de réalisation du système de ventilation d'air,
- la figure 6 est une vue analogue à celle de la figure 1 selon un troisième mode de réalisation de l'invention, pour lequel le système CVCA est un système de ventilation d'air avec une fonctionnalité additionnelle de traitement de l'air, également appelé centrale de traitement d'air, et

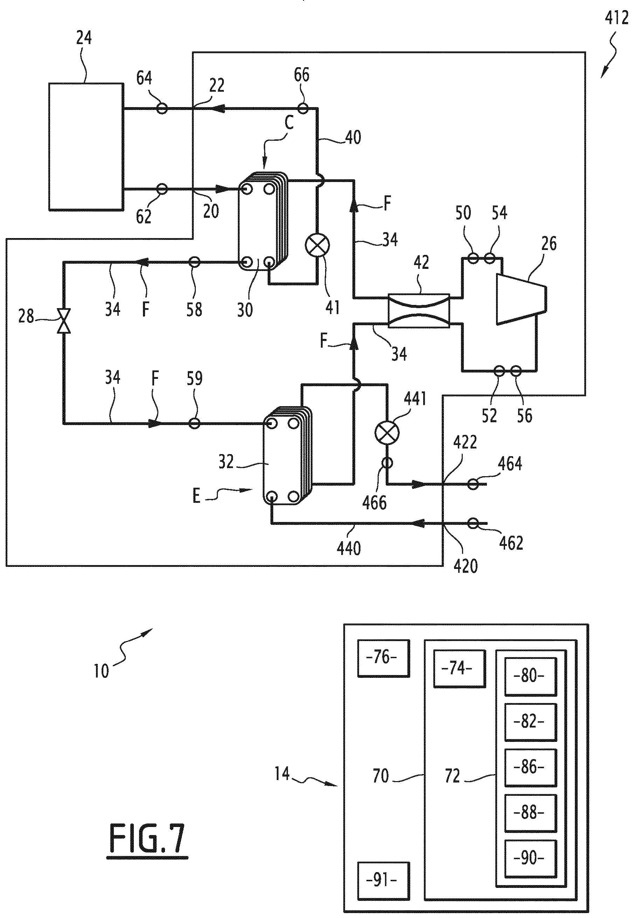

- la figure 7 est une vue analogue à celle de la figure 1 selon un quatrième mode de réalisation de l'invention, pour lequel le système CVCA est une pompe à chaleur eau-eau.

Dans la suite de la description, l'expression « sensiblement égal à » définit une relation d'égalité à plus ou moins 10%.

Un ensemble 10 comprend un système CVCA 12 et un dispositif 14 de surveillance du fonctionnement dudit système CVCA.

Le système CVCA 12 est apte à mettre en œuvre au moins une fonction parmi une fonction de chauffage, une fonction de ventilation, une fonction de traitement de l'air et une fonction de climatisation. Le système CVCA 12 est également appelé système HVAC.

Le système CVCA 12 est destiné à équiper un bâtiment, non représenté. Le système CVCA 12 est, par exemple, utilisé pour une application de processus industriel, telle que le refroidissement d'un liquide ou encore la fourniture d'un liquide à une température donnée.

Le système CVCA 12 est, par exemple, un système aéraulique comportant une bouche d'entrée d'air 16, une bouche de sortie d'air 18, et adapté pour mettre en œuvre un écoulement d'air, représenté par les flèches A, entre la bouche d'entrée 16 et la bouche de sortie 18.

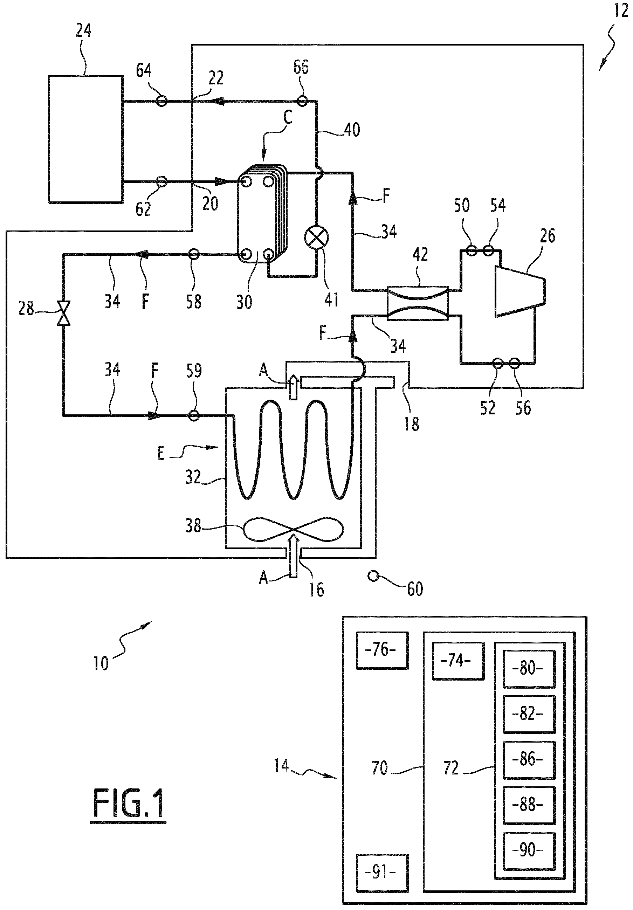

Selon un premier mode de réalisation, visible sur la figure 1, le système CVCA 12 est un système de transfert de chaleur entre de l'air à l'extérieur du bâtiment et un fluide à traiter. Le fluide à traiter est par exemple de l'eau, en particulier de l'eau circulant dans un circuit de chauffage du bâtiment, ou encore de l'air à l'intérieur du bâtiment.

Le système de transfert de chaleur 12 est, par exemple, une pompe à chaleur, également notée PAC, telle qu'une pompe à chaleur aérothermique, en particulier une pompe à chaleur air-eau comme représenté sur la figure 1, ou une pompe à chaleur air-air. En variante, le système de transfert de chaleur 12 est un groupe de froid (de l'anglais *Chiller*)*.*

Le système de transfert de chaleur 12 comprend un orifice 20 d'entrée du fluide à traiter et un orifice 22 de sortie dudit fluide. Le fluide à traiter est, par exemple, fourni en l'orifice d'entrée 20 par une source extérieure 24, puis délivré, après traitement, à savoir après réchauffement ou refroidissement, en l'orifice de sortie 22 à destination de la source extérieure 24, ou encore d'un autre équipement, non représenté.

Le système de transfert de chaleur 12 est adapté pour mettre en œuvre un cycle thermodynamique, connu en soi, au cours duquel un fluide frigorigène passe successivement de l'état gazeux à une basse pression à l'état gazeux à une haute pression, puis à l'état liquide à la haute pression, puis à l'état liquide à la basse pression et à nouveau à l'état gazeux à la basse pression.

Le fluide frigorigène est, par exemple, un mélange de tétrafluoroéthane, de pentafluoroéthane et de difluorométhane, également noté R407C, un mélange de pentafluoroéthane et de difluorométhane, également noté R410A, ou encore du tétrafluoroéthane, également noté R134a.

Par haute pression, on entend une pression généralement comprise entre 10 bars et 100 bars, par exemple comprise entre 10 et 45 bars.

Par basse pression, on entend une pression généralement comprise entre 2 bars et 15 bars.

Le système de transfert de chaleur 12 comprend un compresseur 26 adapté pour recevoir le fluide frigorigène à l'état gazeux et pour comprimer, à l'aide d'une énergie mécanique fournie par un moteur non représenté, le fluide frigorigène à l'état gazeux depuis la basse pression jusqu'à la haute pression, cette augmentation de pression entraînant également une augmentation de la température du fluide frigorigène.

Le système de transfert de chaleur 12 comprend en outre un détendeur 28, également appelé réducteur de pression, le détendeur 28 étant adapté pour recevoir le liquide frigorigène à l'état liquide et à la haute pression, et pour réduire la pression du fluide frigorigène à l'état liquide, depuis la haute pression jusqu'à la basse pression, cette réduction de pression entraînant alors une baisse de la température du fluide frigorigène.

Le système de transfert de chaleur 12 comprend également un premier échangeur thermique 30 et un deuxième échangeur thermique 32 connectés chacun entre le compresseur 26 et le détendeur 28. Le compresseur 26, le premier échangeur thermique 30, le détendeur 28 et le deuxième échangeur thermique 32 sont connectés en série dans cet ordre et en boucle, via un circuit principal 34 de circulation du fluide frigorigène. A titre d'exemple, le premier échangeur thermique 30 est un échangeur à plaques, ou un échangeur à tubes et calandres, ou encore un échangeur de type coaxial, et le deuxième échangeur thermique 32 est une batterie à ailettes, comme représenté sur la figure 1.

Le système de transfert de chaleur 12 comprend un ventilateur 38 apte à faire circuler l'air extérieur depuis la bouche d'entrée 16 vers la bouche de sortie 18, et à l'intérieur du deuxième échangeur thermique 32 pour permettre un échange de chaleur entre l'air extérieur et le fluide frigorigène au niveau du deuxième échangeur 32. Le ventilateur 38 est également appelé groupe moto-ventilé et alors noté GMV.

Le système de transfert de chaleur 12 comprend un circuit auxiliaire 40 de circulation du fluide à traiter depuis l'orifice d'entrée 20 jusqu'à l'orifice de sortie 22, le circuit auxiliaire 40 étant connecté au premier échangeur thermique 30 et comportant une pompe 41 pour faire circuler le fluide à traiter à travers le premier échangeur thermique 30 et permettre un échange de chaleur entre le fluide à traiter et le fluide frigorigène au niveau du premier échangeur 30.

En complément facultatif, le système de transfert de chaleur 12 comprend une vanne d'inversion de cycle 42, telle qu'une vanne à quatre voies, connectée à l'entrée et à la sortie du compresseur 26. La vanne d'inversion de cycle 42 est adaptée pour inverser le sens de circulation du fluide frigorigène à l'intérieur du premier échangeur thermique 30, du détendeur 28 et du deuxième échangeur thermique 32, tout en conservant un même sens de circulation du fluide frigorigène à l'intérieur du compresseur 26, afin de passer, comme décrit ci-après, d'un mode chauffage à un mode refroidissement (également appelé mode rafraîchissement), et inversement. La vanne d'inversion de cycle 42 est aussi adaptée pour interrompre la circulation du fluide frigorigène à travers le circuit principal 34.

Dans l'exemple de la figure 1, le système de transfert de chaleur 12 est une pompe à chaleur fonctionnant en mode chauffage du fluide à traiter, le fluide frigorigène étant destiné à circuler dans le sens des flèches F, en passant par le premier échangeur thermique 30 pour circuler depuis le compresseur 26 vers le détendeur 28, puis en passant par le deuxième échangeur thermique 32 pour circuler depuis le détendeur 28 vers le compresseur 26 à nouveau.

Selon l'exemple de la figure 1, le premier échangeur thermique 30 forme alors un condenseur C connecté en sortie du compresseur 26, le condenseur C étant adapté pour recevoir le fluide frigorigène à l'état gazeux et à la haute pression, et pour liquéfier le fluide frigorigène reçu depuis son état gazeux vers son état liquide, la liquéfaction du fluide frigorigène entraînant une diminution de la température du fluide frigorigène. En sortie du condenseur C, le fluide frigorigène est alors à l'état liquide et à la haute pression. Le deuxième échangeur thermique 32 forme alors un évaporateur E connecté en sortie du détendeur 28, l'évaporateur E étant adapté pour recevoir le fluide frigorigène à l'état liquide et à la basse pression, et pour évaporer le fluide frigorigène reçu depuis son état liquide jusqu'à son état gazeux, l'évaporation du fluide frigorigène correspondant à une augmentation de la température du fluide frigorigène. L'évaporateur E est connecté en entrée du compresseur 26, le fluide frigorigène à la sortie de l'évaporateur E étant à l'état gazeux et à la basse pression.

Selon l'exemple de la figure 1, en mode chauffage, le système de transfert de chaleur 12 est alors apte à réchauffer le fluide à traiter entre l'orifice d'entrée 20 et l'orifice de sortie 22, via le condenseur C qui est apte à libérer de la chaleur, la température du fluide frigorigène diminuant lors de la liquéfaction. Le ventilateur 38 est apte à faire circuler l'air extérieur à l'intérieur du deuxième échangeur thermique 32 correspondant à l'évaporateur E, l'évaporateur E étant alors apte à prélever de la chaleur à l'air extérieur pour permettre l'évaporation du fluide frigorigène.

En variante, le système de transfert de chaleur 12 est une pompe à chaleur fonctionnant en mode refroidissement du fluide à traiter, le fluide frigorigène étant alors destiné à circuler dans le sens opposé aux flèches F, en passant par le deuxième échangeur thermique 32 pour circuler depuis le compresseur 26 vers le détendeur 28, puis en passant par le premier échangeur thermique 30 pour circuler depuis le détendeur 28 vers le compresseur 26 à nouveau.

En mode refroidissement, le premier échangeur thermique 30 forme l'évaporateur E adapté pour évaporer le fluide frigorigène de son état liquide à basse pression jusqu'à son état gazeux à basse pression. Le deuxième échangeur thermique 32 forme le condenseur C adapté pour liquéfier le fluide frigorigène depuis son état gazeux à haute pression vers son état liquide à haute pression. Le premier échangeur thermique 30, formant dans ce cas l'évaporateur E, est alors adapté pour prélever de la chaleur au fluide à traiter, c'est-à-dire refroidir le fluide à traiter, et permettre l'évaporation du fluide frigorigène. En mode refroidissement, l'air prélevé de l'extérieur via la bouche d'entrée 16 est destiné à être réchauffé par le deuxième échangeur thermique 32 formant le condenseur C, avant d'être expulsé par la bouche de sortie 18

Autrement dit, que le mode de fonctionnement du système 12 soit le mode chauffage ou le mode refroidissement, le système de transfert de chaleur 12 comprend le compresseur 26, le condenseur C, le détendeur 28 et l'évaporateur E connectés en série dans cet ordre et en boucle. En mode chauffage, à la figure 1, le condenseur C correspond au premier échangeur thermique 30 et l'évaporateur E correspond au deuxième échangeur thermique 32. Inversement, en mode refroidissement, le condenseur C correspond au deuxième échangeur thermique 32 et l'évaporateur E correspond au premier échangeur thermique 30.

Le système de transfert de chaleur 12 est équipé d'un premier capteur de pression 50 apte à mesurer une première pression du fluide frigorigène à l'état gazeux, le premier capteur de pression 50 étant disposé en sortie du compresseur 26. Quel que soit le mode de fonctionnement du système 12, à savoir chauffage ou refroidissement, le sens de circulation du fluide frigorigène est identique à l'intérieur du compresseur 26, et la première pression mesurée correspond alors à la haute pression.

Le système de transfert de chaleur 12 est équipé d'un deuxième capteur de pression 52 apte à mesurer une deuxième pression du fluide frigorigène à l'état gazeux, le deuxième capteur de pression 52 étant disposé en entrée du compresseur 26. De manière analogue, quel que soit le mode de fonctionnement du système 12 (chauffage ou refroidissement), la deuxième pression mesurée correspond à la basse pression.

Le système de transfert de chaleur 12 est équipé d'un premier capteur de température 54 adapté pour mesurer une première température du fluide frigorigène à l'état gazeux, le premier capteur de température 54 étant disposé en sortie du compresseur 26. De manière analogue, quel que soit le mode de fonctionnement du système 12 (chauffage ou refroidissement), la première température mesurée correspond à la température du fluide frigorigène à l'état gazeux à haute pression.

Le système de transfert de chaleur 12 est muni d'un deuxième capteur de température 56 adapté pour mesurer une deuxième température du fluide frigorigène à l'état gazeux, le deuxième capteur de température 56 étant disposé en entrée du compresseur 26. Quel que soit le mode de fonctionnement du système 12 (chauffage ou refroidissement), la deuxième température mesurée correspond alors à la température du fluide frigorigène à l'état gazeux à basse pression.

Le système de transfert de chaleur 12 est équipé d'un troisième capteur de température 58 adapté pour mesurer une température du fluide frigorigène à l'état liquide, le troisième capteur de température 58 étant disposé entre le détendeur 28 et le premier échangeur thermique 30. En mode chauffage, le troisième capteur de température 58 est alors disposé en entrée du détendeur 28 suivant le sens de circulation du fluide frigorigène, et la troisième température mesurée correspond à la température du fluide frigorigène à l'état liquide à haute pression. Inversement, en mode refroidissement, le troisième capteur de température 58 est disposé en sortie du détendeur 28 suivant le sens de circulation du fluide frigorigène, et la troisième température mesurée correspond alors à la température du fluide frigorigène à l'état liquide à basse pression.

Le système de transfert de chaleur 12 est équipé d'un quatrième capteur de température 59 adapté pour mesurer une température du fluide frigorigène à l'état liquide, le quatrième capteur de température 59 étant disposé entre le détendeur 28 et le deuxième échangeur thermique 32. En mode chauffage, le quatrième capteur de température 59 est alors disposé en sortie du détendeur 28 suivant le sens de circulation du fluide frigorigène, et la quatrième température mesurée correspond à la température du fluide frigorigène à l'état liquide à basse pression. Inversement, en mode refroidissement, le quatrième capteur de température 59 est disposé en entrée du détendeur 28 suivant le sens de circulation du fluide frigorigène, et la quatrième température mesurée correspond alors à la température du fluide frigorigène à l'état liquide à haute pression.

Le système de transfert de chaleur 12 est muni d'un cinquième capteur de température 60 adapté pour mesurer une température à l'extérieur du bâtiment, de préférence à proximité de la bouche d'entrée d'air 16, par exemple à moins de 10 m de la bouche d'entrée d'air 16.

Le système de transfert de chaleur 12 est équipé d'un sixième capteur de température 62 adapté pour mesurer une température du fluide à traiter en entrée du système 12, par exemple en amont de l'orifice d'entrée 20 suivant le sens de circulation du fluide à traiter.

Le système de transfert de chaleur 12 est muni d'un septième capteur de température 64 adapté pour mesurer une température du fluide après traitement, en sortie du système 12, par exemple en aval de l'orifice de sortie 22 suivant le sens de circulation du fluide à traiter.

Le système de transfert de chaleur 12 est équipé d'un capteur de débit 66 adapté pour mesurer le débit du fluide à traiter, à travers le circuit auxiliaire 40.

Le dispositif de surveillance 14 comprend une unité de traitement d'informations 70 formée par exemple d'une mémoire 72 et d'un processeur 74 associé à la mémoire.

En complément facultatif, le dispositif de surveillance 14 comprend un émetteur-récepteur radioélectrique 76, notamment pour échanger des données par ondes radioélectriques avec l'un ou plusieurs des capteurs 50 à 66.

La mémoire 72 est apte à stocker un premier logiciel 80 d'acquisition de valeurs de grandeurs mesurées associées au système CVCA 12. La mémoire 72 est apte à stocker un logiciel 82 d'estimation, en fonction des valeurs acquises des grandeurs mesurées et à l'aide d'un réseau de neurones artificiels 84, de la valeur d'au moins un paramètre représentatif du fonctionnement du système CVCA 12.

La mémoire 72 est apte à stocker un logiciel 86 de diagnostic du système CVCA 12, le logiciel de diagnostic 86 étant configuré pour calculer des probabilités de défauts du système CVCA 12 à l'aide d'un réseau bayésien, non représenté. Les défauts sont prédéfinis, et chaque variable d'entrée du réseau bayésien est associée à un paramètre représentatif respectif, chaque probabilité d'un défaut respectif étant une variable de sortie du réseau bayésien.

En complément facultatif, la mémoire 72 est apte à stocker un deuxième logiciel 88 d'acquisition d'une valeur mesurée de chaque paramètre représentatif du fonctionnement du système CVCA 12, et un logiciel 90 de comparaison, pour chaque paramètre représentatif, de la valeur mesurée avec la valeur estimée.

Selon ce complément facultatif, le dispositif de surveillance 14 comprend par exemple en outre un module 91 d'affichage du résultat de la comparaison pour chaque paramètre représentatif.

Le processeur 74 est apte à exécuter chacun des logiciels 80, 82, 86, 88 et 90, ces logiciels 80, 82, 86, 88 et 90 formant respectivement des premiers moyens d'acquisition des valeurs de grandeurs mesurées, un module d'estimation de la valeur d'au moins un paramètre représentatif du fonctionnement du système CVCA, un module de diagnostic du système CVCA, des deuxièmes moyens d'acquisition des valeurs mesurées de chaque paramètre représentatif et un module de comparaison, pour chaque paramètre représentatif, de la valeur mesurée avec la valeur estimée. Le module d'estimation 82 est de préférence adapté pour estimer la valeur de chacun des paramètres représentatifs du fonctionnement du système CVCA.

En variante, les premiers moyens d'acquisition 80, le module d'estimation 82, le module de diagnostic 86, les deuxièmes moyens d'acquisition 88 et le module de comparaison 90 sont réalisés sous forme de composants logiques programmables, ou encore sous forme de circuits intégrés dédiés.

Le premier logiciel d'acquisition 80 est adapté pour acquérir au moins une valeur de chacune des grandeurs mesurées prises en compte pour la surveillance du système CVCA 12. Le premier logiciel d'acquisition 80 est de préférence adapté pour acquérir différentes valeurs mesurées successivement dans le temps de chacune de ces grandeurs.

Selon le premier mode de réalisation, une première grandeur est la température de l'air à l'extérieur du bâtiment, la première grandeur étant mesurée à l'aide du cinquième capteur de température 60.

Une deuxième grandeur est, par exemple, la température du fluide à traiter en entrée du système CVCA 12, la deuxième grandeur étant mesurée à l'aide du sixième capteur de température 62.

Selon le premier mode de réalisation, l'ensemble des grandeurs mesurées formant les variables d'entrée du réseau de neurones 84 est de préférence constitué de la température de l'air à l'extérieur du bâtiment et de la température du fluide à traiter en entrée du système CVCA 12.

Dans l'exemple de la figure 1, le premier logiciel d'acquisition 80 est alors plus précisément adapté pour recevoir, via l'émetteur-récepteur radioélectrique 76 ou encore via des liaisons filaires de données non représentées, les valeurs mesurées des première et deuxième grandeurs de la part des cinquième et sixième capteurs de température 60, 62.

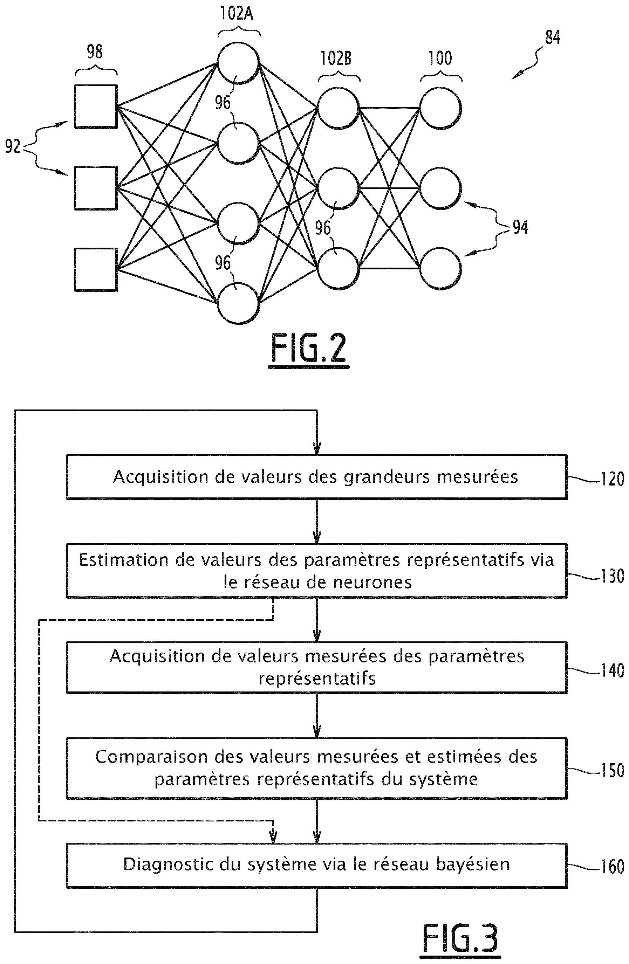

Le logiciel d'estimation 82 est adapté pour estimer, en fonction desdites valeurs acquises des grandeurs mesurées et en mettant en œuvre le réseau de neurones 84, au moins une valeur d'au moins un paramètre correspondant, représentatif du fonctionnement du système CVCA 12. Le logiciel d'estimation 82 est de préférence adapté pour estimer, en fonction desdites valeurs acquises des grandeurs mesurées et en mettant en œuvre le réseau de neurones 84, au moins une valeur de chacun des paramètres représentatifs du fonctionnement du système CVCA 12. Le logiciel d'estimation 82 est de préférence adapté pour estimer des valeurs successives dans le temps de chaque paramètre correspondant. Chaque grandeur mesurée est alors une variable d'entrée 92 du réseau de neurones 84, visible sur la figure 2, et chaque paramètre représentatif est une variable de sortie 94 dudit réseau de neurones 84.

Le réseau de neurones artificiels 84 est, par exemple un réseau avec un algorithme d'apprentissage supervisé utilisant une méthode de rétropropagation du gradient d'erreur. Le réseau de neurones 84 est de préférence un réseau perceptron multicouches, comme représenté sur la figure 2.

Le réseau de neurones 84 comporte une pluralité de neurones artificiels 96 organisés en couches successives 98, 100, 102A, 102B, à savoir une couche d'entrée 98 correspondant aux variables d'entrée 92, une couche de sortie 100 correspondant à la ou aux variables de sortie 94, et d'éventuelles couches intermédiaires 102A, 102B, également appelées couches cachées et disposées entre la couche d'entrée 98 et la couche de sortie 100. Le nombre de neurones artificiels 96 formant la couche d'entrée 98 et correspondant aux variables d'entrée 92 est noté N, avec N nombre entier supérieur ou égal à 2. Le nombre de couche(s) cachée(s) 102A, 102B est noté P, avec P nombre entier, de préférence égal à 1 ou 2.

Dans l'exemple de la figure 2, le réseau de neurones 84 comporte une première 102A et une deuxième 102B couches cachées. Le nombre de neurones 96 composant la première couche cachée 102A est, par exemple compris entre N/2 et N*2.

Une fonction d'activation caractérisant chaque neurone artificiel 96 est, par exemple, une fonction linéaire ou une fonction sigmoïde. Les valeurs initiales de poids synaptiques sont, par exemple, fixées aléatoirement ou pseudo-aléatoirement.

L'apprentissage du réseau de neurones 84 est de préférence supervisé. Il utilise alors, par exemple, un algorithme de rétropropagation du gradient d'erreur, tel qu'un algorithme fondé sur la minimisation d'un critère d'erreur en utilisant une méthode dite de descente du gradient.

Selon le premier mode de réalisation, chaque paramètre représentatif est de préférence choisi parmi le groupe consistant en :
- la pression du fluide frigorigène à l'état gazeux en entrée du compresseur 26, i.e. la basse pression, mesurée le cas échéant à l'aide du deuxième capteur de pression 52 ;
- la pression du fluide frigorigène à l'état gazeux en sortie du compresseur 26, i.e. la haute pression, mesurée le cas échéant à l'aide du premier capteur de pression 50 ;
- la température du fluide frigorigène à l'état gazeux en sortie du compresseur 26, également appelée température de refoulement, mesurée le cas échéant à l'aide du premier capteur de température 54 ;
- une première différence de température, également appelée surchauffe, égale à une température d'aspiration du compresseur 26, mesurée le cas échéant à l'aide du deuxième capteur de température 56, moins une température de saturation côté basse pression, i.e. en entrée du compresseur 26, obtenue le cas échéant à partir du deuxième capteur de pression 52 ;
- une deuxième différence de température, également appelée sous-refroidissement, égale à une température de saturation côté haute pression, i.e. en sortie du compresseur 26, obtenue le cas échéant à partir du premier capteur de pression 50, moins une température en sortie du condenseur C, mesurée le cas échéant à l'aide du troisième capteur de température 58 en mode chauffage ou à l'aide du quatrième capteur de température 59 en mode refroidissement ;
- une troisième différence de température, correspondant à la température du fluide à traiter en l'orifice de sortie 22 moins la température du fluide à traiter en l'orifice d'entrée 20, mesurée le cas échéant à l'aide des sixième et septième capteurs de température 62, 64 ;
- une consommation électrique du compresseur 26 ;
- une consommation électrique du ventilateur 38 ;
- une consommation électrique de la pompe 41 ;
- un débit du fluide à traiter, mesuré le cas échéant à l'aide du capteur de débit 66 ;
- une durée de fonctionnement à plein régime du système 12 ;
- un nombre de démarrages du système 12 ; et
- un nombre de dégivrages de l'évaporateur E.

Selon le premier mode de réalisation, l'ensemble des paramètres représentatifs formant les variables de sortie du réseau de neurones 84 est de préférence constitué des éléments du groupe défini ci-dessus.

Chaque paramètre représentatif est alors propre à être estimé par le module d'estimation 82 et à l'aide du réseau de neurones 84, en fonction des grandeurs d'entrée. Chaque paramètre représentatif est en complément propre à être mesuré, par exemple à l'aide d'un ou plusieurs des capteurs 50 à 66, comme indiqué ci-dessus, ou directement via un ou plusieurs capteurs d'énergie électrique, non représentés, pour les consommations électriques du compresseur 26, du ventilateur 38 ou de la pompe 41.

Le logiciel de diagnostic 86 est adapté pour calculer les probabilités des défauts prédéfinis du système CVCA 12 à l'aide du réseau bayésien et en fonction des valeurs des paramètres représentatifs calculées par le logiciel d'estimation 82.

Le réseau bayésien est, par exemple, de type naïf.

Lorsque la mémoire 72 comporte en outre le deuxième logiciel d'acquisition 88 et le logiciel de comparaison 90, les valeurs fournies en entrée du réseau bayésien pour calculer les probabilités des défauts prédéfinis correspondant aux résultats de la comparaison entre la valeur mesurée et la valeur estimée, effectuée par le logiciel de comparaison 90 et pour chaque paramètre représentatif.

Des termes linguistiques, tels que « correct », « augmente » et « diminue », sont par exemple attribués à chaque paramètre représentatif en entrée du réseau bayésien. Le terme « correct » correspond au cas où la valeur mesurée est égale à la valeur estimée via le réseau de neurones 84 à un écart prédéfini près, le terme « augmente » correspond au cas où la valeur mesurée est supérieure à la somme de ladite valeur estimée et de l'écart prédéfini, et le terme « diminue » correspond au cas où la valeur mesurée est inférieure à la valeur estimée moins l'écart prédéfini. L'écart prédéfini est par exemple égal à 10% de la valeur estimée.

Le module d'affichage 91 est adapté pour afficher, pour chaque paramètre représentatif, le résultat de la comparaison effectuée entre la valeur mesurée et la valeur estimée. Le résultat est, par exemple, affiché sous forme d'un voyant de couleur, non représenté, pour chaque paramètre représentatif, chaque voyant de couleur étant adapté pour changer de couleur en fonction de l'écart entre la valeur mesurée et la valeur estimée. Chaque voyant de couleur est, par exemple, apte à présenter trois couleurs distinctes, telles que vert, orange et rouge. Une première couleur, telle que vert, correspond, par exemple, au cas où la valeur mesurée est égale à la valeur estimée à l'écart prédéfini près ; une deuxième couleur, telle qu'orange, correspond au cas où l'écart entre la valeur mesurée et la valeur estimée est faible tout en étant supérieur, en valeur absolue, à l'écart prédéfini ; et une troisième couleur, telle que rouge, correspond au cas où l'écart entre la valeur mesurée et la valeur estimée est plus élevé.

Selon le premier mode de réalisation, chaque défaut prédéfini est de préférence choisi parmi le groupe consistant en :
- la présence, en mode chauffage, de saletés obstruant le passage de l'air dans le deuxième échangeur thermique 32, formant alors l'évaporateur E ;
- un retour anormal au niveau du compresseur 26 de la haute pression vers la basse pression ; par exemple dû à une mauvaise étanchéité de clapets anti-retour de la haute pression vers la basse pression du compresseur 26 ;
- une présence de bulles d'air dans le circuit auxiliaire 40 de circulation du fluide à traiter ;
- un encrassement du premier échangeur thermique 30 ; par exemple dû à la présence d'impuretés dans le circuit auxiliaire 40 ;
- une température d'air extérieur extrêmement basse, correspondant à des conditions climatiques extérieures extrêmes ;
- un défaut de connexion électrique d'un module électronique de commande, apte à commander notamment le compresseur 26, le détendeur 28, la pompe 41 et le ventilateur 38 du système CVCA ;
- un défaut du compresseur 26 ;
- une saturation d'un premier filtre, non représenté, disposé entre le détendeur 28 et le premier échangeur thermique 30, le premier filtre permettant de déshydrater le fluide frigorigène ;
- une position trop ouverte du détendeur 28, correspondant à une réduction trop importante de la pression du fluide frigorigène ;
- une position trop fermée du détendeur 28, correspondant à une réduction trop faible de la pression du fluide frigorigène ;
- une entrée d'humidité dans le circuit principal 34 de circulation du fluide frigorigène ;
- une erreur de paramétrage d'un algorithme de régulation mis en œuvre par le module électronique de commande ;
- un encrassement d'un deuxième filtre, non représenté, connecté au circuit auxiliaire 40, par exemple dû à la présence de boue, d'impuretés dans le fluide à traiter circulant dans le circuit auxiliaire 40 ;
- une fuite du circuit auxiliaire 40 ;
- une fuite du circuit principal 34 ;
- la présence d'éléments incondensables, tels que de l'eau et/ou de l'huile, dans le circuit principal 34 ;
- la présence, en mode chauffage, d'une couche de glace sur le deuxième échangeur thermique 32, formant alors l'évaporateur E ;
- un défaut d'une résistance thermique incluse dans le compresseur 26 et permettant de chauffer l'huile du moteur du compresseur lorsque le compresseur 26 est à l'arrêt ;
- une déconnexion de l'un des capteurs 50 à 66 ;
- un défaut de l'un des capteurs 50 à 66 ;
- un sous-dimensionnement du système CVCA 12 par rapport au besoin, la puissance thermique du système CVCA 12 étant, autrement dit, insuffisante;
- un surdimensionnement du système CVCA 12 par rapport au besoin, la puissance thermique du système CVCA 12 étant, autrement dit, trop importante;
- une surchauffe anormale du compresseur 26 ;
- une surintensité d'une alimentation électrique du compresseur 26 ;
- un défaut d'un variateur de vitesse, non représenté, le variateur de vitesse étant adapté pour faire varier la vitesse du compresseur 26 ;
- une fuite d'huile du compresseur 26 ;
- un défaut du ventilateur 38 ;
- un défaut de la pompe 41 du circuit auxiliaire 40 ; et
- une mauvaise distribution du circuit auxiliaire 40, formant un réseau hydraulique, dans le bâtiment lorsque le fluide à traiter est de l'eau.

Le fonctionnement du dispositif de surveillance 14 selon l'invention va à présent être décrit à l'aide de la figure 3 représentant un organigramme du procédé de surveillance selon l'invention.

Lors d'une étape initiale 120, le premier logiciel d'acquisition 80 acquiert des valeurs des grandeurs mesurées, par exemple reçues de la part des capteurs 60, 62 correspondants. Les capteurs 60, 62 sont de préférence synchronisés entre eux, de sorte que les valeurs reçues par le premier logiciel d'acquisition 80 correspondent à des valeurs mesurées sensiblement à un même instant.

Le logiciel d'estimation 82 estime ensuite, lors de l'étape 130, les valeurs des paramètres représentatifs du système CVCA 12 à l'aide du réseau de neurones 84, décrit précédemment, les valeurs des grandeurs mesurées formant les variables d'entrée 92 du réseau de neurones et les paramètres représentatifs à estimer formant les variables de sortie 94 dudit réseau de neurones.

Le deuxième logiciel d'acquisition 88 acquiert, lors de l'étape suivante 140, les valeurs mesurées desdits paramètres représentatifs. Dans l'exemple de la figure 3, l'étape de deuxième acquisition 140 est effectuée après l'étape d'estimation 130, et l'homme du métier comprendra bien entendu qu'il est possible d'effectuer, en variante, l'étape de deuxième acquisition 140 en même temps que l'étape de première acquisition 120, ou encore après l'étape de première acquisition 120 et avant l'étape d'estimation 130.

Suite à l'étape d'estimation 130 et l'étape de deuxième acquisition 140, le logiciel de comparaison 90 effectue, lors de l'étape 150, la comparaison de la valeur mesurée avec la valeur estimée pour chaque paramètre représentatif du système CVCA 12. En complément, le logiciel de comparaison 90 associe, à chaque paramètre représentatif du système de transfert de chaleur 12, un terme linguistique parmi les termes « correct », « augmente » et « diminue », en fonction du résultat de la comparaison, comme décrit précédemment.

Enfin, le logiciel de diagnostic 86 effectue le diagnostic du système CVCA 12 lors de l'étape suivante 160, en calculant les probabilités des défauts prédéfinis du système CVCA 12 à l'aide du réseau bayésien, chaque variable d'entrée du réseau bayésien étant associée à un paramètre représentatif respectif et chaque probabilité d'un défaut respectif étant une variable de sortie du réseau bayésien.

Les probabilités associées aux différents défauts prédéfinis sont initialement prédéterminées comme étant équiprobables, puis sont calculées en fonction des variations de chacun des paramètres représentatifs en entrée du réseau bayésien. Les probabilités sont, par exemple, recalculées périodiquement, ou encore recalculées à chaque changement de valeur d'au moins l'un des paramètres représentatifs, par exemple un changement correspondant à une variation supérieure à 10% de la valeur précédente.

À l'issue de l'étape de diagnostic 160, le procédé de surveillance retourne à l'étape 120 au cours de laquelle le premier logiciel d'acquisition 80 acquiert de nouvelles valeurs des grandeurs mesurées, et les étapes suivantes 130 à 160 sont réitérées.

Les étapes 120 à 160 sont, par exemple, effectuées périodiquement. En variante, l'étape de première acquisition 120 est réitérée à chaque changement de valeur d'au moins l'une des grandeurs mesurées, tel qu'un changement correspondant à une variation supérieure à 10% de la valeur précédente, et les autres étapes 130 à 160 sont effectuées à la suite de cette nouvelle étape 120 pour prendre en compte ce changement de valeur.

Le dispositif de surveillance du fonctionnement 14 permet alors, de par le module d'estimation 82 mettant en œuvre le réseau de neurones artificiels 84, de détecter des débuts d'anomalies de fonctionnement en surveillant des variations de grandeurs prédéterminées associées au système CVCA, ces grandeurs formant les variables d'entrée du réseau de neurones 84.

L'homme du métier notera à cet effet qu'il n'est pas nécessaire de surveiller un nombre important de grandeurs prédéterminées pour détecter un dysfonctionnement du système CVCA 12 et diagnostiquer la cause la plus probable de ce dysfonctionnement. En effet, selon le premier mode de réalisation, seules deux grandeurs prédéterminées sont prises en compte, à savoir la température de l'air à l'extérieur du bâtiment et la température du fluide à traiter en entrée du système CVCA 12.

L'apprentissage du réseau de neurones 84 s'effectue au cours des premiers mois de fonctionnement du système CVCA 12, par exemple au cours des trois premiers mois de fonctionnement en mode de chauffage et au cours des trois premiers mois de fonctionnement en mode refroidissement.

Le dispositif de surveillance du fonctionnement 14 permet ensuite, de par le module de diagnostic 86 mettant en œuvre le réseau bayésien, de calculer les probabilités de chacun des défauts prédéfinis et de diagnostiquer la cause la plus probable d'un début d'anomalies détecté, en déterminant le ou les défauts ayant les probabilités les plus élevées.

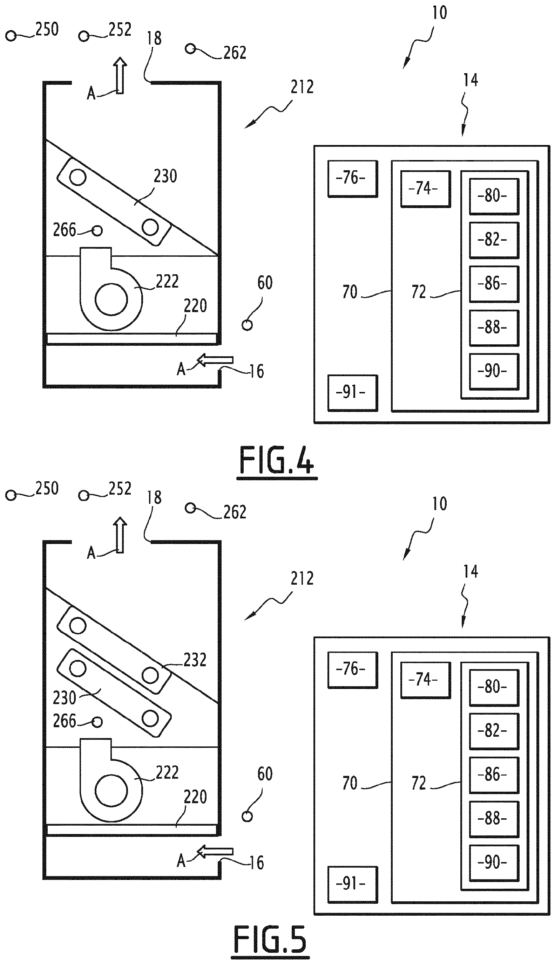

Les figures 4 et 5 illustrent un deuxième mode de réalisation de l'invention pour lequel les éléments identiques au premier mode de réalisation, décrit précédemment, sont repérés par des références identiques, et ne sont pas décrits à nouveau.

L'ensemble 10 comprend un système CVCA 212 et le dispositif de surveillance 14.

Le système CVCA 212 est un système aéraulique, et comporte la bouche d'entrée d'air 16, la bouche de sortie d'air 18, et est adapté pour mettre en œuvre un écoulement d'air (flèches A) entre la bouche d'entrée 16 et la bouche de sortie 18. Le système CVCA 212 est destiné à équiper un bâtiment, non représenté, et à être installé dans une pièce du bâtiment, non représentée.

Selon le deuxième mode de réalisation, le système CVCA 212 est un système de ventilation d'air, adapté pour reprendre l'air via la bouche d'entrée d'air 16, puis pour souffler l'air via la bouche de sortie d'air 18, l'air soufflé ayant été traité, par exemple filtré, chauffé et/ou refroidi, lors de son passage à travers le système de ventilation 212 depuis la bouche d'entrée 16 vers la bouche de sortie 18. Le système de ventilation d'air 212 est également appelé unité de confort, et noté alors UC.

Le système de ventilation d'air 212 comprend un filtre 220 disposé à proximité de la bouche d'entrée 16, et adapté pour filtrer l'air reçu depuis la bouche d'entrée 16.

Le système de ventilation d'air 212 comprend un ventilateur 222, également appelé groupe moto-ventilé et alors noté GMV, apte à faire circuler l'air repris à l'intérieur du bâtiment, depuis la bouche d'entrée 16 vers la bouche de sortie 18.

En complément, le système de ventilation d'air 212 comprend au moins un échangeur thermique 230, 232 adapté pour, en fonction du type d'échangeur, refroidir ou bien réchauffer l'air circulant depuis la bouche d'entrée 16 vers la bouche de sortie 18.

Dans l'exemple de la figure 4, le système de ventilation d'air 212 comprend un seul échangeur thermique, tel qu'un premier échangeur thermique 230 adapté pour refroidir l'air.

En variante non représentée, le système de ventilation d'air 212 comprend un seul échangeur thermique, tel qu'un deuxième échangeur thermique 232 adapté pour réchauffer l'air.

Dans l'exemple de la figure 5, le système de ventilation d'air 212 comprend à la fois le premier échangeur thermique 230 pour refroidir l'air et le deuxième échangeur thermique 232 pour réchauffer l'air. Autrement dit, le système de ventilation d'air 212 est adapté, dans l'exemple de la figure 5, pour souffler via la bouche de sortie 18 de l'air refroidi ou bien réchauffé en fonction d'un mode de fonctionnement du système de ventilation parmi un mode chauffage et un mode refroidissement.

Le système de ventilation d'air 212 est équipé d'un premier capteur de concentration 250 adapté pour mesurer une concentration en dioxyde de carbone à l'intérieur de la pièce, et d'un deuxième capteur de concentration 252 adapté pour mesurer une concentration d'au moins un agent polluant à l'intérieur de la pièce.

Le système de ventilation d'air 212 est muni du capteur de température 60 adapté pour mesurer la température de l'air repris à l'intérieur du bâtiment, de préférence à proximité de la bouche d'entrée vers 16. Le système de ventilation d'air 212 est également équipé d'un deuxième capteur de température 262 adapté pour mesurer une température ambiante à l'intérieur de la pièce.

Le système de ventilation d'air 212 est équipé d'un capteur de débit 266 adapté pour mesurer le débit d'air soufflé via la bouche de sortie 18. Le capteur de débit 266 est de préférence disposé entre le ventilateur 222 et la bouche de sortie 18.

Chaque échangeur thermique 230, 232 est par exemple une batterie thermique, le premier échangeur thermique 230 étant une batterie hydraulique froide, et le deuxième échangeur thermique 232 étant une batterie hydraulique chaude et/ou une batterie thermique électrique. La batterie thermique électrique comporte une résistance électrique plongée dans un fluide caloporteur.

Le dispositif de surveillance 14 comprend, de manière identique au premier mode de réalisation, l'unité de traitement d'informations 70, l'émetteur-récepteur radioélectrique 76 et le module d'affichage 91, l'unité de traitement d'informations 70 étant formée par exemple de la mémoire 72 et du processeur 74.

La mémoire 72 est alors apte à stocker le premier logiciel d'acquisition de valeurs de grandeurs mesurées 80, le logiciel d'estimation 82 mettant en œuvre le réseau de neurones artificiels 84 et le logiciel de diagnostic 86 mettant en œuvre le réseau bayésien. En complément facultatif, la mémoire 72 est apte à stocker le deuxième logiciel d'acquisition 88 et le logiciel de comparaison 90.

Selon le deuxième mode de réalisation, la première grandeur est également la température de l'air à l'extérieur du bâtiment, la première grandeur étant mesurée à l'aide du capteur de température 60.

Selon le deuxième mode de réalisation, une deuxième grandeur est, par exemple, la température ambiante à l'intérieur de la pièce, la deuxième grandeur étant mesurée via le deuxième capteur de température 262.

Une troisième grandeur est, par exemple, la concentration en dioxyde de carbone à l'intérieur de la pièce, mesurée via le premier capteur de concentration 250. Une quatrième grandeur est, par exemple, la concentration d'au moins un agent polluant à l'intérieur de la pièce, mesurée via le deuxième capteur de concentration 252.

Selon le deuxième mode de réalisation, l'ensemble des grandeurs mesurées formant les variables d'entrée du réseau de neurones 84 est de préférence constitué de la température de l'air à l'extérieur du bâtiment, de la température ambiante à l'intérieur de la pièce, de la concentration en dioxyde de carbone à l'intérieur de la pièce et de la concentration d'au moins un agent polluant à l'intérieur de la pièce.

Dans l'exemple des figures 4 et 5, le premier logiciel d'acquisition 80 est alors adapté pour recevoir, via l'émetteur récepteur radioélectrique 76 ou encore via des liaisons filaires de données non représentées, les valeurs mesurées des première, deuxième, troisième et quatrième grandeurs de la part des capteurs de température 60, 262 et des capteurs de concentration 250, 252.

Le logiciel d'estimation 82 est, de manière analogue, adapté pour estimer, en fonctions desdites valeurs acquises des grandeurs mesurées et à l'aide du réseau de neurones 84, les valeurs des paramètres correspondants, représentatifs du fonctionnement du système de ventilation d'air 212.

Selon le deuxième mode de réalisation, chaque paramètre représentatif est de préférence choisi parmi le groupe consistant en :
- un débit d'air soufflé via la bouche de sortie 18 par le système de ventilation d'air, mesuré le cas échéant à l'aide du capteur de débit 266 ;
- une consommation électrique du ventilateur 222 ; et
- une durée de fonctionnement à plein régime du ventilateur 222 au cours d'une période temporelle prédéterminée, par exemple une période de 12 heures.

Selon le deuxième mode de réalisation, l'ensemble des paramètres représentatifs formant les variables de sortie du réseau de neurones 84 est de préférence constitué des éléments du groupe défini ci-dessus.

Chaque paramètre représentatif est alors propre à être estimé par le module d'estimation 82, et en complément propre à être mesuré, par exemple à l'aide du capteur de débit 266, comme indiqué ci-dessus, ou directement via un contrôleur du ventilateur 222.

De manière analogue, le logiciel de diagnostic 86 est adapté pour calculer les probabilités des défauts prédéfinis du système de ventilation d'air à l'aide du réseau bayésien et en fonction des valeurs des paramètres représentatifs estimées par le logiciel d'estimation 82.

Selon le deuxième mode de réalisation, chaque défaut prédéfini est de préférence choisi parmi le groupe consistant en :
- un défaut du ventilateur 222 ;
- un encrassement du filtre à air 220 ;
- un encrassement de l'un des échangeurs thermiques 230, 232 ;
- un encrassement d'un filtre à eau, non représenté, d'un circuit hydraulique alimentant le premier échangeur thermique 230 et/ou le second échangeur thermique 232 lorsque le second échangeur thermique 232 est une batterie hydraulique ;
- un défaut d'une pompe, non représentée, du circuit hydraulique alimentant le premier échangeur thermique 230 et/ou le second échangeur thermique 232 lorsque le second échangeur thermique 232 est une batterie hydraulique ;
- un défaut de l'un des capteurs 60, 250, 252, 262, 266 ; et
- un sous-dimensionnement du système de ventilation d'air par rapport à la pièce.

Le fonctionnement du dispositif de surveillance 14 selon le deuxième mode de réalisation est analogue à celui décrit précédemment pour le premier mode de réalisation, et n'est pas décrit à nouveau.

Les avantages du dispositif de surveillance 14 selon le deuxième mode de réalisation sont analogues à ceux décrits précédemment pour le premier mode de réalisation, et ne sont pas décrits à nouveau.

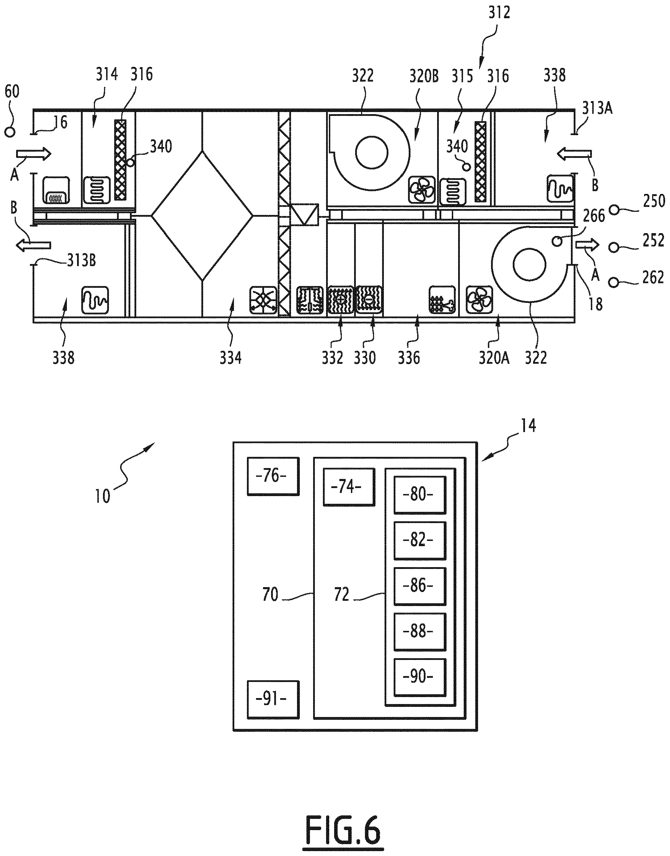

La figure 6 illustre un troisième mode de réalisation de l'invention pour lequel les éléments identiques au deuxième mode de réalisation, décrit précédemment, sont repérés par des références identiques, et ne sont pas décrits à nouveau.

L'ensemble 10 comprend un système CVCA 312 et le dispositif de surveillance 14.

Le système CVCA 312 est un système aéraulique, et comporte la bouche d'entrée d'air 16, la bouche de sortie d'air 18, et est adapté pour mettre en œuvre un premier écoulement d'air (flèches A) entre la bouche d'entrée 16 et la bouche de sortie 18. En complément, le système CVCA 312 comporte une deuxième bouche d'entrée d'air 313A, une deuxième bouche de sortie d'air 313B, et est adapté pour mettre en œuvre un deuxième écoulement d'air (flèches B) entre la deuxième bouche d'entrée 313A et la deuxième bouche de sortie 313B.

Le système CVCA 312 est destiné à équiper un bâtiment, non représenté, et à être installé à l'extérieur du bâtiment, par exemple en toiture ou dans un parking.

Selon le troisième mode de réalisation, le système CVCA 312 est un système de ventilation et de traitement d'air, adapté pour prélever l'air extérieur via la ou les bouches d'entrée d'air 16 et pour reprendre l'air à l'intérieur du bâtiment via la ou les bouches d'entrée d'air 313A, puis pour souffler l'air à l'intérieur du bâtiment via la ou les bouches de sortie d'air 18, et pour rejeter l'air à l'extérieur du bâtiment via la ou les bouches de sortie 313B, l'air soufflé ayant été traité, par exemple filtré, chauffé et/ou refroidi, voire humidifié ou déshumidifié, lors de son passage à travers le système de ventilation et de traitement 312 depuis la ou les bouches d'entrée 16vers la ou les bouches de sortie 18 et l'air rejeté ayant été traité, par exemple filtré, lors de son passage à travers le système de ventilation et de traitement 312 depuis la ou les bouches d'entrée 313A vers la ou les bouches de sortie 313B. Le système de ventilation et de traitement 312 est également appelé centrale de traitement d'air, et alors noté CTA.

Lorsque le système de ventilation et de traitement 312 comporte une seule bouche d'entrée d'air 16 et une seule bouche de sortie d'air 18, il est également appelé centrale de traitement d'air simple flux. Lorsque ce système de ventilation et de traitement 312 comporte deux bouches d'entrée d'air 16, 313A et deux bouches de sortie d'air 18, 313B adaptées pour mettre en œuvre deux écoulements d'air distincts, il est également appelé centrale de traitement d'air double flux.

Le système de ventilation et de traitement 312 comprend une première section de filtration d'air 314 disposée à proximité de la bouche d'entrée 16, et adaptée pour filtrer l'air reçu depuis la bouche d'entrée 16. En complément, il comprend une deuxième section de filtration d'air 315 adaptée pour filtrer l'air circulant entre la deuxième bouche d'entrée 313A et la deuxième bouche de sortie 313B. Chaque section de filtration d'air 314, 315 comprend un filtre à air 316, tel qu'un filtre gravimétrique, un filtre opacimétrique, ou encore un filtre à charbon actif.

Le système de ventilation et de traitement 312 comprend deux sections de ventilation d'air 320A, 320B, une première section de ventilation 320A associée au premier écoulement d'air (flèches A) entre les premières bouches d'entrée 16 et de sortie 18, et une deuxième section de ventilation 320B associée au deuxième écoulement d'air (flèches B) entre les deuxièmes bouches d'entrée 313A et de sortie 313B. Chaque section de ventilation 320A, 320B comporte un ventilateur 322, également appelé groupe moto-ventilé et alors noté GMV, apte à faire circuler l'air depuis la bouche d'entrée 16, 313A correspondante vers la bouche de sortie 18, 313B correspondante.

Le système de ventilation et de traitement 312 comprend une section de réfrigération 330 adaptée pour refroidir l'air circulant depuis la bouche d'entrée 16 vers la bouche de sortie 18. La section de réfrigération 330 comporte une ou plusieurs batteries hydrauliques froides, non représentées.

Le système de ventilation et de traitement 312 comprend une section de chauffage 332 adaptée pour chauffer l'air circulant depuis la bouche d'entrée 16 vers la bouche de sortie 18. La section de chauffage 332 comprend une ou plusieurs batteries hydrauliques chaudes et/ou une batterie thermique électrique, non représentées. En variante, la section de chauffage 332 comprend seulement un générateur thermique à brûleur de gaz soufflé, non représenté et également appelé brûleur.

En complément facultatif, le système de ventilation et de traitement 312 comprend une section 334 de récupération d'énergie et une section 336 d'humidification de l'air, par pulvérisation, ruissellement ou vaporisation, la section d'humidification 336 comportant un humidificateur, non représenté. La section de récupération 334 est adaptée pour permettre un croisement des premier et deuxième écoulements d'air, afin de récupérer la chaleur ou le froid contenu dans l'air du bâtiment.

En complément facultatif, le système de ventilation et de traitement 312 comprend deux sections complémentaires 338, chacune comportant notamment un piège à son pour diminuer le niveau acoustique du système de ventilation et de traitement 312.

De manière analogue au deuxième mode de réalisation, le système de ventilation et de traitement 312 est équipé du premier capteur de concentration 250 adapté pour mesurer la concentration en dioxyde de carbone à l'intérieur de la pièce, et du deuxième capteur de concentration 252 adapté pour mesurer la concentration d'au moins un agent polluant à l'intérieur de la pièce.

Le système de ventilation et de traitement 312 est muni du capteur de température 60 adapté pour mesurer la température de l'air à l'extérieur du bâtiment, de préférence à proximité de la bouche d'entrée d'air 16. Le système de ventilation et de traitement 312 est également équipé du deuxième capteur de température 262 adapté pour mesurer une température ambiante à l'intérieur de la pièce.

Le système de ventilation et de traitement 312 est équipé du capteur de débit 266 adapté pour mesurer le débit d'air soufflé via la bouche de sortie 18. Le capteur de débit 266 est de préférence disposé entre le ventilateur 322 et la bouche de sortie 18.

Le système de ventilation et de traitement 312 est équipé d'un capteur différentiel de pression 340, adapté pour mesurer un delta de pression aux bornes de chacun des filtres 316. Chaque capteur différentiel de pression 340 permet alors d'évaluer l'encrassement du filtre 316 correspondant.

Le dispositif de surveillance 14 est analogue à celui du deuxième mode de réalisation, décrit précédemment, et n'est pas décrit à nouveau.

Les grandeurs formant les variables d'entrée du réseau de neurones 84 selon le troisième mode de réalisation comportent celles selon le deuxième mode de réalisation. La première grandeur est la température de l'air à l'extérieur du bâtiment, mesurée à l'aide du capteur de température 60. La deuxième grandeur est, par exemple, la température ambiante à l'intérieur de la pièce, mesurée via le deuxième capteur de température 262. La troisième grandeur est la concentration en dioxyde de carbone à l'intérieur de la pièce, mesurée via le premier capteur de concentration 250, et la quatrième grandeur est la concentration d'au moins un agent polluant à l'intérieur de la pièce, mesurée via le deuxième capteur de concentration 252.

Les grandeurs formant les variables d'entrée du réseau de neurones 84 selon le troisième mode de réalisation comportent en outre le delta de pression aux bornes de chaque filtre 316, mesuré à l'aide de chaque capteur différentiel de pression 340.

Selon le troisième mode de réalisation, l'ensemble des grandeurs mesurées formant les variables d'entrée du réseau de neurones 84 est de préférence constitué de ces première, deuxième, troisième et quatrième grandeurs, ainsi que des deltas de pression aux bornes de chacun des filtres 316.

Le ou les paramètres représentatifs formant les variables de sortie du réseau de neurones 84 selon le troisième mode de réalisation sont identiques à ceux selon le deuxième mode de réalisation, et chaque paramètre représentatif est de préférence choisi parmi le groupe consistant en :
- un débit d'air soufflé via la bouche de sortie 18 par le système de ventilation et de traitement, mesuré le cas échéant à l'aide du capteur de débit 266 ;
- une consommation électrique du ou des ventilateurs 322 ; et
- une durée de fonctionnement à plein régime du ou des ventilateurs 322 au cours d'une période temporelle prédéterminée, par exemple une période de 12 heures.

Selon le troisième mode de réalisation, l'ensemble des paramètres représentatifs formant les variables de sortie du réseau de neurones 84 est de préférence constitué des éléments du groupe défini ci-dessus.

Chaque paramètre représentatif est alors propre à être estimé par le module d'estimation 82, et en complément propre à être mesuré, par exemple à l'aide du capteur de débit 266, comme indiqué ci-dessus, ou directement via un contrôleur des ventilateurs 322.

Selon le troisième mode de réalisation, chaque défaut prédéfini est de préférence choisi parmi le groupe consistant en :
- un défaut du ou des ventilateurs 322 ;
- un encrassement du ou des filtres à air 316 ;
- un encrassement de la ou des batteries thermiques hydrauliques ;
- un encrassement d'un filtre à eau, non représenté, d'un circuit hydraulique alimentant la ou les batteries thermiques hydrauliques ;
- un défaut d'une pompe, non représentée, du circuit hydraulique alimentant la ou les batteries thermiques hydrauliques ;
- un encrassement de la batterie thermique électrique ;
- un encrassement du générateur thermique à brûleur de gaz soufflé ;
- un défaut de l'humidificateur ;
- un encrassement d'un filtre, non représenté, d'un circuit hydraulique alimentant l'humidificateur ;
- une présence d'eau gelée dans le circuit hydraulique alimentant le ou les humidificateurs ;
- un défaut de l'un des capteurs 60, 250, 252, 262, 266, 340 ; et
- un sous-dimensionnement du système de ventilation et de traitement d'air par rapport à la pièce.

Le fonctionnement du dispositif de surveillance 14 selon le troisième mode de réalisation est analogue à celui décrit précédemment pour les premier et deuxième modes de réalisation, et n'est pas décrit à nouveau.

Les avantages du dispositif de surveillance 14 selon le troisième mode de réalisation sont analogues à ceux décrits précédemment pour les premier et deuxième modes de réalisation, et ne sont pas décrits à nouveau.

Selon un quatrième mode de réalisation, le système CVCA 412 est un système de transfert de chaleur entre un fluide à traiter, également appelé premier fluide, et un fluide à l'extérieur du bâtiment, également appelé deuxième fluide. Le premier fluide est par exemple de l'eau, en particulier de l'eau circulant dans un circuit de chauffage du bâtiment.

Le deuxième fluide est par exemple également de l'eau, circulant à l'extérieur du bâtiment, par exemple dans le sol ou dans une nappe souterraine, ce deuxième fluide étant alors capté sur la nappe ou en vertical. Le cas échéant, le système de transfert de chaleur 412 est un système géothermique.

Le système de transfert de chaleur 412 est, par exemple, une pompe à chaleur eau-eau, également notée PAC eau-eau.

Le système de transfert de chaleur 412 comprend l'orifice d'entrée 20 et l'orifice de sortie 22, dits respectivement premier orifice d'entrée 20 et premier orifice de sortie 22, pour la circulation du fluide à traiter, dit premier fluide. Le premier fluide est fourni en le premier orifice d'entrée 20 par la source extérieure 24, puis délivré, après traitement, à savoir après réchauffement ou refroidissement, en le premier orifice de sortie 22.

Le système de transfert de chaleur 412 comprend en outre un deuxième orifice d'entrée 420 apte à recevoir le deuxième fluide et un deuxième orifice de sortie 422 apte à délivrer le deuxième fluide en sortie du système de transfert de chaleur.

Le système de transfert de chaleur 412 est également adapté pour mettre en œuvre le cycle thermodynamique, et comprend alors le compresseur 26, le détendeur 28, le premier échangeur thermique 30 et le deuxième échangeur thermique 32 connectés chacun entre le compresseur 26 et le détendeur 28. Le compresseur 26, le premier échangeur thermique 30, le détendeur 28 et le deuxième échangeur thermique 32 sont connectés en série dans cet ordre et en boucle, via le circuit principal 34 de circulation du fluide frigorigène. A titre d'exemple, chaque échangeur thermique 30, 32 est un échangeur à plaques, ou un échangeur à tubes et calandres, ou encore un échangeur de type coaxial.

Le système de transfert de chaleur 412 comprend le circuit auxiliaire 40, dit premier circuit auxiliaire, de circulation du fluide à traiter depuis le premier orifice d'entrée 20 jusqu'au premier orifice de sortie 22, le premier circuit auxiliaire 40 étant connecté au premier échangeur thermique 30 et comportant la pompe 41, dite première pompe, pour faire circuler le fluide à traiter à travers le premier échangeur thermique 30 et permettre un échange de chaleur entre le fluide à traiter et le fluide frigorigène au niveau du premier échangeur 30.

Le système de transfert de chaleur 412 comprend un deuxième circuit auxiliaire 440 de circulation du deuxième fluide depuis le deuxième orifice d'entrée 420 jusqu'au deuxième orifice de sortie 422, le deuxième circuit auxiliaire 440 étant connecté au deuxième échangeur thermique 32 et comportant une deuxième pompe 441, pour faire circuler le deuxième fluide à travers le deuxième échangeur thermique 32 et permettre un échange de chaleur entre le deuxième fluide et le fluide frigorigène au niveau du deuxième échangeur 32.

En complément facultatif, le système de transfert de chaleur 412 comprend la vanne d'inversion de cycle 42, telle que la vanne à quatre voies décrite précédemment pour le premier mode de réalisation.

Le système de transfert de chaleur 412 est équipé du premier capteur de pression 50 apte à mesurer la première pression du fluide frigorigène à l'état gazeux, du deuxième capteur de pression 52 apte à mesurer la deuxième pression du fluide frigorigène à l'état gazeux, du premier capteur de température 54 adapté pour mesurer la première température du fluide frigorigène à l'état gazeux, du deuxième capteur de température 56 adapté pour mesurer la deuxième température du fluide frigorigène à l'état gazeux, du troisième capteur de température 58 adapté pour mesurer la température du fluide frigorigène à l'état liquide, et du quatrième capteur de température 59 adapté pour mesurer la température du fluide frigorigène à l'état liquide.

Le système de transfert de chaleur 412 est équipé du sixième capteur de température 62 adapté pour mesurer la température du premier fluide en entrée du système 412, du septième capteur de température 64 adapté pour mesurer la température du premier fluide après traitement, en sortie du système 412, et du capteur de débit 66, dit premier capteur de débit, adapté pour mesurer le débit du premier fluide, à travers le premier circuit auxiliaire 40.

Le système de transfert de chaleur 412 est également équipé d'un huitième capteur de température 462 adapté pour mesurer la température du deuxième fluide en entrée du système 412, et d'un neuvième capteur de température 464 adapté pour mesurer la température du deuxième fluide en sortie du système 412.

Le système de transfert de chaleur 412 est équipé d'un deuxième capteur de débit 466 adapté pour mesurer le débit du deuxième fluide, à travers le deuxième circuit auxiliaire 440.

Selon le quatrième mode de réalisation, une première grandeur formant une première variable d'entrée du réseau de neurones 84 est la température du premier fluide en entrée du système CVCA 412, la première grandeur étant mesurée à l'aide du sixième capteur de température 62.

Une deuxième grandeur formant une deuxième variable d'entrée du réseau de neurones 84 est, par exemple, la température du deuxième fluide en entrée du système CVCA 412, la deuxième grandeur étant mesurée à l'aide du huitième capteur de température 462.

Selon le quatrième mode de réalisation, l'ensemble des grandeurs mesurées formant les variables d'entrée du réseau de neurones 84 est de préférence constitué de la température du premier fluide en entrée du système CVCA 412 et de la température du deuxième fluide en entrée du système CVCA 412.

Chaque paramètre représentatif formant une variable respective de sortie du réseau de neurones 84 selon le quatrième mode de réalisation est de préférence choisi parmi le groupe consistant en :
- la pression du fluide frigorigène à l'état gazeux en entrée du compresseur 26 ;
- la pression du fluide frigorigène à l'état gazeux en sortie du compresseur 26 ;
- la température du fluide frigorigène à l'état gazeux en sortie du compresseur 26 ;
- la première différence de température, appelée surchauffe ;
- la deuxième différence de température, appelée sous-refroidissement ;
- la troisième différence de température, correspondant à la température du premier fluide en le premier orifice de sortie 22 moins la température du premier fluide en le premier orifice d'entrée 20, mesurée le cas échéant à l'aide des sixième et septième capteurs de température 62, 64 ;
- une quatrième différence de température, correspondant à la température du deuxième fluide en le deuxième orifice de sortie 422 moins la température du deuxième fluide en le deuxième orifice d'entrée 420, mesurée le cas échéant à l'aide des huitième et neuvième capteurs de température 462, 464 ;
- la consommation électrique du compresseur 26 ;
- la consommation électrique de la première pompe 41 ;
- une consommation électrique de la deuxième pompe 441 ;
- le débit du premier fluide, mesuré le cas échéant à l'aide du premier capteur de débit 66 ;
- un débit du deuxième fluide, mesuré le cas échéant à l'aide du deuxième capteur de débit 466 ;
- la durée de fonctionnement à plein régime du système 12 ; et
- le nombre de démarrages du système 12.

Selon le quatrième mode de réalisation, chaque défaut prédéfini est de préférence choisi parmi le groupe consistant en :
- un retour anormal au niveau du compresseur 26 de la haute pression vers la basse pression ;
- une présence de bulles d'air dans le premier circuit auxiliaire 40 ;
- une présence de bulles d'air dans le deuxième circuit auxiliaire 440 ;
- un encrassement du premier échangeur thermique 30 ;
- un encrassement du deuxième échangeur thermique 32 ;
- un défaut de connexion électrique du module électronique de commande, apte à commander notamment le compresseur 26, le détendeur 28, la première pompe 41 et la deuxième pompe 441 du système CVCA ;
- un défaut du compresseur 26 ;
- une saturation du premier filtre disposé entre le détendeur 28 et le premier échangeur thermique 30 ;
- une position trop ouverte du détendeur 28 ;
- une position trop fermée du détendeur 28 ;
- une entrée d'humidité dans le circuit principal 34 de circulation du fluide frigorigène ;
- une erreur de paramétrage de l'algorithme de régulation mis en œuvre par le module électronique de commande ;
- un encrassement du deuxième filtre connecté au premier circuit auxiliaire 40 ;
- un encrassement d'un troisième filtre, non représenté, connecté au deuxième circuit auxiliaire 440 ;
- une fuite du premier circuit auxiliaire 40 ;
- une fuite du deuxième circuit auxiliaire 440 ;
- une fuite du circuit principal 34 ;
- la présence d'éléments incondensables dans le circuit principal 34 ;
- un défaut de la résistance thermique incluse dans le compresseur 26 ;
- une déconnexion de l'un des capteurs 50 à 59, 62 à 66 et 462 à 466 ;
- un défaut de l'un des capteurs 50 à 59, 62 à 66 et 462 à 466 ;
- un sous-dimensionnement du système CVCA 412 ;
- un surdimensionnement du système CVCA 412 ;
- une surchauffe anormale du compresseur 26 ;
- une surintensité de l'alimentation électrique du compresseur 26 ;
- un défaut du variateur de vitesse ;
- une fuite d'huile du compresseur 26 ;
- un défaut de la première pompe 41 du premier circuit auxiliaire 40 ;
- un défaut de la deuxième pompe 441 du deuxième circuit auxiliaire 440 ;
- une mauvaise distribution du premier circuit auxiliaire 40 ; et
- une mauvaise distribution du deuxième circuit auxiliaire 440.

Selon le quatrième mode de réalisation, l'ensemble des paramètres représentatifs formant les variables de sortie du réseau de neurones 84 est de préférence constitué des éléments du groupe défini ci-dessus.

Le fonctionnement du dispositif de surveillance 14 selon le quatrième mode de réalisation est analogue à celui décrit précédemment pour le premier mode de réalisation, et n'est pas décrit à nouveau.

Les avantages du dispositif de surveillance 14 selon le quatrième mode de réalisation sont analogues à ceux décrits précédemment pour le premier mode de réalisation, et ne sont pas décrits à nouveau.

L'homme du métier comprendra que l'invention s'applique également à des systèmes CVCA tels que des armoires de traitement d'air qui sont des machines destinées au contrôle de température et d'hygrométrie de locaux dits sensibles, comme des centres de données, des salles informatiques, et qui sont placées dans ces locaux. Les armoires de traitement d'air sont, par exemple, des armoires alimentées en eau glacée, et elles comportent les mêmes composants que le système de ventilation d'air 212 décrit précédemment.

En variante, les armoires de traitement d'air sont des armoires autonomes avec un groupe de condensation à air séparé, et elles comportent alors les composants du système de ventilation d'air 212 décrit précédemment, ainsi qu'une batterie et un détendeur qui sont raccordés par un circuit frigorifique au groupe de condensation à air situé à l'extérieur du bâtiment. On dit alors que l'air à l'intérieur du bâtiment est chauffé ou refroidi par détente directe.

L'homme du métier comprendra que l'invention s'applique également à des systèmes CVCA installés sur un toit (de l'anglais *rooftop*), ces systèmes comportant les mêmes composants que le système de transfert de chaleur 12, le système de ventilation d'air 212 et respectivement le système de ventilation et de traitement 312 décrits précédemment.

On conçoit ainsi que le dispositif de surveillance 14 selon l'invention permet d'effectuer une maintenance préventive particulièrement efficace du système CVCA 12, 212, 312, 412.

## Revendications

1. Dispositif (14) de surveillance du fonctionnement d'un système CVCA (12 ; 212 ; 312°; 412), c'est-à-dire un système mettant en oeuvre au moins une fonction parmi une fonction de chauffage, une fonction de ventilation, une fonction de traitement de l'air et une fonction de climatisation, le dispositif (14) comprenant :
- des premiers moyens (80) d'acquisition de valeurs de grandeurs mesurées associées au système CVCA (12 ; 212 ; 312°; 412),
- un module (82) d'estimation, en fonction des valeurs acquises des grandeurs mesurées et à l'aide d'un réseau de neurones (84), de la valeur d'au moins un paramètre représentatif du fonctionnement du système CVCA (12; 212; 312°; 412), chaque grandeur mesurée étant une variable d'entrée (92) du réseau de neurones et chaque paramètre représentatif étant une variable de sortie (94) du réseau de neurones,
- un module (86) de diagnostic du système CVCA, le module de diagnostic (86) étant configuré pour calculer des probabilités de défauts du système CVCA (12 ; 212 ; 312°; 412) à l'aide d'un réseau bayésien, les défauts étant prédéfinis, chaque variable d'entrée du réseau bayésien étant associée à un paramètre représentatif respectif et chaque probabilité d'un défaut respectif étant une variable de sortie du réseau bayésien,
- des deuxièmes moyens (88) d'acquisition d'une valeur mesurée de chaque paramètre représentatif du fonctionnement du système CVCA (12 ; 212 ; 312°; 412), et
- un module (90) de comparaison, pour chaque paramètre représentatif, de la valeur mesurée avec la valeur estimée,
les valeurs en entrée du réseau bayésien correspondant au résultat de la comparaison, pour chaque paramètre représentatif, entre sa valeur mesurée et sa valeur estimée.

2. Dispositif (14) selon la revendication 1, dans lequel le système CVCA (12 ; 212 ; 312) est destiné à équiper un bâtiment, et
dans lequel l'une des grandeurs mesurées est une température d'air à l'extérieur du bâtiment.

3. Dispositif (14) selon la revendication 2, dans lequel le système CVCA est un système (12) de transfert de chaleur entre l'air à l'extérieur du bâtiment et un fluide à traiter, et
dans lequel une autre grandeur mesurée est une température dudit fluide en entrée du système CVCA (12).

4. Dispositif (14) selon l'une quelconque des revendications précédentes, dans lequel le système CVCA est destiné à équiper un bâtiment et est un système (12) de transfert de chaleur entre un air extérieur à l'extérieur du bâtiment et un fluide à traiter,
le système de transfert de chaleur (12) comprenant :
- une bouche (16) d'entrée de l'air extérieur et une bouche (18) de sortie de l'air extérieur,
- un orifice (20) d'entrée du fluide à traiter et un orifice (22) de sortie du fluide à traiter,
- une pompe (41) apte à faire circuler le fluide à traiter entre l'orifice d'entrée (20) et l'orifice de sortie (22),
- un compresseur (26), un condenseur (C), un détendeur (28) et un évaporateur (E) connectés en série et en boucle, et
- un ventilateur (38) apte à faire circuler l'air extérieur depuis la bouche d'entrée (16) vers la bouche de sortie (18), et
dans lequel chaque paramètre représentatif est choisi parmi le groupe consistant en : une pression du fluide frigorigène à l'état gazeux en entrée du compresseur (26) ; une pression du fluide frigorigène à l'état gazeux en sortie du compresseur (26) ; une température du fluide frigorigène à l'état gazeux en sortie du compresseur (26) ; une différence de température égale à une température d'aspiration du compresseur (26) moins une température de saturation en entrée du compresseur (26) ; une différence de température égale à une température de saturation en sortie du compresseur (26) moins une température en sortie du condenseur (C) ; une variation de la température du fluide à traiter entre l'orifice d'entrée (20) et l'orifice de sortie (22) ; une consommation électrique du compresseur (26) ; une consommation électrique du ventilateur (38) ; une consommation électrique de la pompe (41) ; un débit du fluide à traiter ; une durée de fonctionnement à plein régime du système (12) ; un nombre de démarrages du système (12) et un nombre de dégivrages de l'évaporateur (E).

5. Dispositif (14) selon la revendication 2, dans lequel le système CVCA est un système de ventilation d'air (212 ; 312), et
dans lequel au moins une autre grandeur mesurée est choisie parmi le groupe consistant en : une température d'air ambiant à l'intérieur du bâtiment, une concentration en dioxyde de carbone et au moins une concentration d'un agent polluant à l'intérieur du bâtiment.

6. Dispositif (14) selon l'une quelconque des revendications 1, 2 et 5, dans lequel le système CVCA est destiné à équiper un bâtiment, et est un système de ventilation d'air (212 ; 312) comportant un ventilateur (222 ; 322), et
dans lequel chaque paramètre représentatif est choisi parmi le groupe consistant en : un débit d'air en sortie du système (212 ; 312), une consommation électrique du ventilateur (222 ; 322) et une durée de fonctionnement à plein régime du ventilateur (222 ; 322).

7. Dispositif (14) selon la revendication 1, dans lequel le système CVCA est un système (412) de transfert de chaleur entre un premier fluide et un deuxième fluide, et
dans lequel une première grandeur mesurée est une température du premier fluide en entrée du système CVCA (412), et une deuxième grandeur mesurée est une température du deuxième fluide en entrée du système CVCA (412).

8. Dispositif (14) selon la revendication 7, dans lequel le système de transfert de chaleur (412) comprend :
- un premier orifice (20) d'entrée du premier fluide et un premier orifice (22) de sortie du premier fluide,
- un deuxième orifice (420) d'entrée du deuxième fluide et un deuxième orifice (422) de sortie du deuxième fluide,
- une première pompe (41) apte à faire circuler le premier fluide entre le premier orifice d'entrée (20) et le premier orifice de sortie (22),
- une deuxième pompe (441) apte à faire circuler le deuxième fluide entre le deuxième orifice d'entrée (420) et le deuxième orifice de sortie (422), et
- un compresseur (26), un condenseur (C), un détendeur (28) et un évaporateur (E) connectés en série et en boucle, et
dans lequel chaque paramètre représentatif est choisi parmi le groupe consistant en : une pression du fluide frigorigène à l'état gazeux en entrée du compresseur (26) ; une pression du fluide frigorigène à l'état gazeux en sortie du compresseur (26) ; une température du fluide frigorigène à l'état gazeux en sortie du compresseur (26) ; une différence de température égale à une température d'aspiration du compresseur (26) moins une température de saturation en entrée du compresseur (26) ; une différence de température égale à une température de saturation en sortie du compresseur (26) moins une température en sortie du condenseur (C) ; une variation de la température du premier fluide à traiter entre le premier orifice d'entrée (20) et le premier orifice de sortie (22) ; une variation de la température du deuxième fluide à traiter entre le deuxième orifice d'entrée (420) et le deuxième orifice de sortie (422); une consommation électrique du compresseur (26) ; une consommation électrique de la première pompe (41) ; une consommation électrique de la deuxième pompe (441) ; un débit du premier fluide ; un débit du deuxième fluide ; une durée de fonctionnement à plein régime du système (12) et un nombre de démarrages du système (12).

9. Dispositif (14) selon l'une quelconque des revendications précédentes, dans lequel le réseau de neurones (84) est un réseau à apprentissage supervisé, tel qu'un réseau perceptron multicouches.

10. Ensemble (10) comprenant un système CVCA (12 ; 212 ; 312°; 412) et un dispositif (14) de surveillance du fonctionnement dudit système (12 ; 212 ; 312°; 412),
**caractérisé en ce que** le dispositif de surveillance (14) est conforme à l'une quelconque des revendications précédentes.

11. Procédé de surveillance du fonctionnement d'un système CVCA (12 ; 212 ; 312 ; 412), le procédé comprenant les étapes suivantes :
- l'acquisition (120) de valeurs de grandeurs mesurées associées au système CVCA (12 ; 212 ; 312°; 412), et
- l'estimation (130), en fonction des valeurs acquises des grandeurs mesurées et à l'aide d'un réseau de neurones (84), de la valeur d'au moins un paramètre représentatif du fonctionnement du système CVCA (12 ; 212 ; 312°; 412), chaque grandeur mesurée étant une variable d'entrée (92) du réseau de neurones et chaque paramètre représentatif étant une variable de sortie (94) du réseau de neurones,
- le diagnostic (160) du système CVCA (12 ; 212 ; 312°; 412), lors de laquelle des probabilités de défauts du système CVCA (12 ; 212 ; 312°; 412) sont calculées à l'aide d'un réseau bayésien, les défauts étant prédéfinis, chaque variable d'entrée du réseau bayésien étant associée à un paramètre représentatif respectif et chaque probabilité d'un défaut respectif étant une variable de sortie du réseau bayésien,
- l'acquisition (140) d'une valeur mesurée de chaque paramètre représentatif du fonctionnement du système CVCA (12 ; 212 ; 312°; 412), et
- la comparaison (150), pour chaque paramètre représentatif, de la valeur mesurée avec la valeur estimée,
les valeurs en entrée du réseau bayésien correspondant au résultat de la comparaison, pour chaque paramètre représentatif, entre sa valeur mesurée et sa valeur estimée.

12. Produit programme d'ordinateur comportant des instructions logicielles qui, lorsqu'elles sont exécutées par un ordinateur, mettent en œuvre un procédé selon la revendication 11.

## Patentansprüche

1. Vorrichtung (14) zum Überwachen des Betriebs eines CVCA-Systems (12, 212, 312°, 412), das heißt eines Systems, welches zumindest eine Funktion von einer Heizfunktion, einer Belüftungsfunktion, einer Luftbehandlungsfunktion und einer Klimatisierungsfunktion ausführt, wobei die Vorrichtung (14) aufweist:
- erste Mittel (80) zum Erlangen von Werten gemessener Größen, welche mit dem CVCA-System (12, 212, 312°, 412) assoziiert sind,
- ein Modul (82) zum Abschätzen, in Abhängigkeit von den erlangten Werten der gemessenen Größen und mit Hilfe eines neuronalen Netzes (84), des Wertes von zumindest einem Parameter, welcher für den Betrieb des CVCA-Systems (12, 212, 312°, 412) repräsentativ ist, wobei jede gemessene Größe eine Eingangsvariable (92) des neuronalen Netzes ist, und wobei jeder repräsentative Parameter eine Ausgangsvariable (94) des neuronalen Netzes ist,
- ein Modul (86) zur Diagnose des CVCA-Systems, wobei das Modul zur Diagnose (86) eingerichtet ist, um Wahrscheinlichkeiten für Fehler des CVCA-Systems (12, 212, 312°, 412) mit Hilfe eines bayesschen Netzes zu berechnen, wobei die Fehler vordefiniert sind, wobei jede Eingangsvariable des bayesschen Netzes mit einem jeweiligen repräsentativen Parameter assoziiert ist, und wobei jede Wahrscheinlichkeit eines jeweiligen Fehlers eine Ausgangsvariable des bayesschen Netzes ist,
- zweite Mittel (88) zum Erlangen eines gemessenen Wertes von jedem Parameter, welcher repräsentativ für den Betrieb des CVCA-Systems (12, 212, 312°, 412) ist, und
- ein Modul (90) zum Vergleichen, für jeden repräsentativen Parameter, des gemessenen Wertes mit dem abgeschätzten Wert,
wobei die Werte am Eingang des bayesschen Netzes zum Ergebnis des Vergleichens, für jeden repräsentativen Parameter, zwischen seinem gemessenen Wert und seinem abgeschätzten Wert korrespondieren.

2. Vorrichtung (14) gemäß Anspruch 1, wobei das CVCA-System (12, 212, 312) dazu bestimmt ist, ein Gebäude auszustatten, und
wobei eine der gemessenen Größen eine Lufttemperatur außerhalb des Gebäudes ist.

3. Vorrichtung (14) gemäß Anspruch 2, wobei das CVCA-System ein System (12) zur Übertragung von Wärme zwischen Luft außerhalb des Gebäudes und einem zu behandelnden Fluid ist, und
wobei eine weitere gemessene Größe eine Temperatur des besagten Fluids am Eingang des CVCA-Systems (12) ist.

4. Vorrichtung (14) gemäß irgendeinem der vorherigen Ansprüche, wobei das CVCA-System dazu bestimmt ist, ein Gebäude auszustatten, und ein System (12) zum Übertragen von Wärme zwischen einer Außenluft außerhalb des Gebäudes und einem zu behandelnden Fluid ist,
wobei das System zum Übertragen von Wärme (12) aufweist:
- einen Anschluss (16) zum Einlass der Außenluft und einen Anschluss (18) zum Auslass der Außenluft,
- eine Öffnung (20) zum Einlass des zu behandelnden Fluids und eine Öffnung (22) zum Auslass des zu behandelnden Fluids,
- eine Pumpe (41), welche geeignet ist, das zu behandelnde Fluid zwischen der Öffnung zum Einlass (20) und der Öffnung zum Auslass (22) zu zirkulieren,
- einen Kompressor (26), einen Kondensator (C), einen Druckminderer (28) und einen Verdampfer (E), welche seriell und in einer Schleife verbunden sind, und
- einen Lüfter (38), welcher geeignet ist, um die Außenluft vom Anschluss zum Einlass (16) zum Anschluss zum Auslass (18) hin zirkulieren zu lassen, und
wobei jeder repräsentative Parameter ausgewählt ist aus der Gruppe, bestehend aus: einem Druck des Kältefluids im gasförmigen Zustand am Eingang des Kompressors (26), einem Druck des Kältefluids im gasförmigen Zustand am Ausgang des Kompressors (26), einer Temperatur des Kältefluids im gasförmigen Zustand am Ausgang des Kompressors (26), einer Temperaturdifferenz, welche gleich ist zu einer Ansaugtemperatur des Kompressors (26) minus einer Sättigungstemperatur am Eingang des Kompressors (26), einer Temperaturdifferenz, welche gleich ist zu einer Sättigungstemperatur am Ausgang des Kompressors (26) minus einer Temperatur am Ausgang des Kondensators (C), einer Änderung der Temperatur des zu behandelnden Fluids zwischen der Öffnung zum Einlass (20) und der Öffnung zum Auslass (22), einem elektrischen Verbrauch des Kompressors (26), einem elektrischen Verbrauch des Lüfters (38), einem elektrischen Verbrauch der Pumpe (41), einem Durchfluss des zu behandelnden Fluids, einer Dauer des Betriebs des Systems (12) im Volllast-Bereich, einer Anzahl von Startvorgängen des Systems (12) und einer Anzahl von Abtauvorgängen des Verdampfers (E).

5. Vorrichtung (14) gemäß Anspruch 2, wobei das CVCA-System ein System zur Belüftung mit Luft (212, 312) ist, und
wobei zumindest eine weitere gemessene Größe ausgewählt ist aus der Gruppe, bestehend aus: einer Umgebungslufttemperatur im Inneren des Gebäudes, einer Kohlenstoffdioxid-Konzentration und zumindest einer Konzentration eines Schadstoffs im Inneren des Gebäudes.

6. Vorrichtung (14) gemäß irgendeinem der Ansprüche 1, 2 und 5, wobei das CVCA-System dazu bestimmt ist, ein Gebäude auszustatten, und ein System zur Belüftung mit Luft (212, 312) ist, welches einen Lüfter (222, 322) aufweist, und
wobei jeder repräsentative Parameter ausgewählt ist aus der Gruppe, bestehend aus: einem Durchfluss von Luft am Ausgang des Systems (212, 312), einem elektrischen Verbrauch des Lüfters (222, 322) und einer Dauer des Betriebs des Lüfters (222, 322) im Volllast-Bereich.

7. Vorrichtung (14) gemäß Anspruch 1, wobei das CVCA-System ein System (412) zur Übertragung von Wärme zwischen einem ersten Fluid und einem zweiten Fluid ist, und
wobei eine erste gemessene Größe eine Temperatur des ersten Fluids am Eingang des CVCA-Systems (412) ist und eine zweite gemessene Größe eine Temperatur des zweiten Fluids am Eingang des CVCA-Systems (412) ist.

8. Vorrichtung (14) gemäß Anspruch 7, wobei das System zur Übertragung von Wärme (412) aufweist:
- eine erste Öffnung (20) zum Einlass des ersten Fluids und eine erste Öffnung (22) zum Auslass des ersten Fluids,
- eine zweite Öffnung (420) zum Einlass des zweiten Fluids und eine zweite Öffnung (422) zum Auslass des zweiten Fluids,
- eine erste Pumpe (41), welche geeignet ist, das erste Fluid zwischen der ersten Öffnung zum Einlass (20) und der ersten Öffnung zum Auslass (22) zirkulieren zu lassen,
- eine zweite Pumpe (441), welche geeignet ist, das zweite Fluid zwischen der zweiten Öffnung zum Einlass (420) und der zweiten Öffnung zum Auslass (422) zirkulieren zu lassen, und
- einen Kompressor (26), einen Kondensator (C), einen Druckminderer (28) und einen Verdampfer (E), welche seriell und in einer Schleife verbunden sind, und
wobei jeder repräsentative Parameter ausgewählt ist aus der Gruppe, bestehend aus: einem Druck des Kältefluids im gasförmigen Zustand am Eingang des Kompressors (26), einem Druck des Kältefluids im gasförmigen Zustand am Ausgang des Kompressors (26), einer Temperatur des Kältefluids im gasförmigen Zustand am Ausgang des Kompressors (26), einer Temperaturdifferenz, welche gleich ist zu einer Ansaugtemperatur des Kompressors (26) minus einer Sättigungstemperatur am Eingang des Kompressors (26), einer Temperaturdifferenz, welche gleich ist zu einer Sättigungstemperatur am Ausgang des Kompressors (26) minus einer Temperatur am Ausgang des Kondensators (C), einer Änderung der Temperatur des zu behandelnden ersten Fluids zwischen der ersten Öffnung zum Einlass (20) und der ersten Öffnung zum Auslass (22), einer Änderung der Temperatur des zu behandelnden zweiten Fluids zwischen der zweiten Öffnung zum Einlass (420) und der zweiten Öffnung zum Auslass (422), einem elektrischen Verbrauch des Kompressors (26), einem elektrischen Verbrauch der ersten Pumpe (41), einem elektrischen Verbrauch der zweiten Pumpe (441), einem Durchfluss des ersten Fluids, einem Durchfluss des zweiten Fluids, einer Dauer des Betriebs des Systems (12) im Volllast-Bereich und einer Anzahl von Startvorgängen des Systems (12).

9. Vorrichtung (14) gemäß irgendeinem der vorherigen Ansprüche, wobei das neuronale Netz (84) ein Überwachtes-Lernen-Netz ist, wie zum Beispiel ein mehrschichtiges Perzeptronnetz.

10. Anordnung (10), welche ein CVCA-System (12, 212, 312°, 412) und eine Vorrichtung (14) zum Überwachen des Betriebs des besagten Systems (12, 212, 312°, 412) aufweist,
**dadurch gekennzeichnet, dass** die Vorrichtung zum Überwachen (14) gemäß irgendeinem der vorherigen Ansprüche ist.

11. Verfahren zum Überwachen des Betriebs eines CVCA-Systems (12, 212, 312, 412), wobei das Verfahren die folgenden Schritte aufweist:
- Erlangen (120) von Werten gemessener Größen, welche mit dem CVCA-System (12, 212, 312°, 412) assoziiert sind, und
- Abschätzen (130), in Abhängigkeit von den erlangten Werten der gemessenen Größen und mit Hilfe eines neuronalen Netzes (84), des Wertes von zumindest einem Parameter, welcher für den Betrieb des CVCA-Systems (12, 212, 312°, 412) repräsentativ ist, wobei jede gemessene Größe eine Eingangsvariable (92) des neuronalen Netzes ist, und wobei jeder repräsentative Parameter eine Ausgangsvariable (94) des neuronalen Netzes ist,
- Diagnose (160) des CVCA-Systems (12, 212, 312°, 412), während welcher Wahrscheinlichkeiten für Fehler des CVCA-Systems (12, 212, 312°, 412) mit Hilfe eines bayesschen Netzes berechnet werden, wobei die Fehler vordefiniert sind, wobei jede Eingangsvariable des bayesschen Netzes mit einem jeweiligen repräsentativen Parameter assoziiert ist, und wobei jede Wahrscheinlichkeit eines jeweiligen Fehlers eine Ausgangsvariable des bayesschen Netzes ist,
- Erlangen (140) eines gemessenen Wertes jedes Parameters, welcher repräsentativ für den Betrieb des CVCA-Systems (12, 212, 312°, 412) ist, und
- Vergleichen (150), für jeden repräsentativen Parameter, des gemessenen Wertes mit dem abgeschätzten Wert,
wobei die Werte am Eingang des bayesschen Netzes zum Ergebnis des Vergleichens, für jeden repräsentativen Parameter, zwischen seinem gemessenen Wert und seinem abgeschätzten Wert korrespondieren.

12. Computerprogrammprodukt, welches Logikanweisungen aufweist, welche, wenn sie mittels eines Computers ausgeführt werden, ein Verfahren gemäß Anspruch 11 ausführen.

## Claims

1. Device (14) for monitoring the operation of an HVAC system (12; 212; 312°; 412), i.e. a system carrying out at least one function from a heating function, a ventilation function, an air-treatment function and an air-conditioning function, the device (14) comprising:
- first means (80) for acquiring values of measured quantities associated with the HVAC system (12; 212; 312°; 412),
- a module (82) for estimating, depending on the acquired values of the measured quantities and using a neural network (84), the value of at least one parameter which is representative of the operation of the HVAC system (12; 212; 312°; 412), each measured quantity being an input variable (92) of the neural network and each representative parameter being an output variable (94) of the neural network,
- a module (86) for performing diagnostics on the HVAC system, the diagnostics module (86) being designed to calculate the probabilities of faults in the HVAC system (12; 212; 312°; 412) using a Bayesian network, the faults being predefined, each input variable of the Bayesian network being associated with a relevant representative parameter and each probability of a relevant fault being an output variable of the Bayesian network,
- second means (88) for acquiring a measured value of each parameter which is representative of the operation of the HVAC system (12; 212; 312°; 412), and
- a module (90) for comparing, for each representative parameter, the measured value with the estimated values,
the input values of the Bayesian network corresponding to the result of the comparison, for each representative value, between its measured value and its estimated value.

2. Device (14) according to claim 1, wherein the HVAC system (12; 212; 312) is intended to be provided in a building, and
wherein one of the measured quantities is a temperature of the air outside the building.

3. Device (14) according to claim 2, wherein the HVAC system is a system (12) for transferring heat between air outside the building and a fluid to be treated, and
wherein another measured quantity is a temperature of said fluid at the inlet of the HVAC system (12).

4. Device (14) according to any of the preceding claims, wherein the HVAC system is intended to be provided in a building and is a system (12) for transferring heat between outside air which is outside the building and a fluid to be treated,
the heat transfer system (12) comprising:
- an inlet mouth (16) for outside air and an outlet mouth (18) for outside air,
- an inlet opening (20) for fluid to be treated and an outlet opening (22) for fluid to be treated,
- a pump (41) which is capable of circulating the fluid to be treated between the inlet opening (20) and the outlet opening (22),
- a compressor (26), a condenser (C), an expansion valve (28) and an evaporator (E) which are connected in series and in a loop, and
- a blower (38) which is capable of circulating outside air from the inlet mouth (16) towards the outlet mouth (18), and
wherein each representative parameter is selected from the group consisting of:
a pressure of the refrigerant in the gaseous state at the inlet of the compressor (26); a pressure of the refrigerant in the gaseous state at the outlet of the compressor (26); a temperature of the refrigerant in the gaseous state at the outlet of the compressor (26); a temperature difference equal to a suction temperature of the compressor (26) minus a saturation temperature at the inlet of the compressor (26); a temperature difference equal to a saturation temperature at the outlet of the compressor (26) minus a temperature at the outlet of the condenser (C); a variation in the temperature of the fluid to be treated between the inlet opening (20) and the outlet opening (22); an electrical consumption of the compressor (26); an electrical consumption of the blower (38); an electrical consumption of the pump (41); a flow rate of the fluid to be treated; a period of full-speed operation of the system (12); the number of start-ups of the system (12) and the number of defrosts of the evaporator (E).

5. Device (14) according to claim 2, wherein the HVAC system is an air ventilation system (212; 312), and
wherein at least one other measured quantity is selected from the group consisting of:
a temperature of ambient air inside the building, a carbon dioxide concentration and at least one concentration of a polluting agent inside the building.

6. Device (14) according to any of claims 1, 2 and 5, wherein the HVAC system is intended to be provided in a building and is an air ventilation system (212; 312) comprising a blower (222; 322), and
wherein each representative parameter is selected from the group consisting of:
an air flow rate at the outlet of the system (212; 312), an electrical consumption of the blower (222; 322) and a period of full-speed operation of the blower (222; 322).

7. Device (14) according to claim 1, wherein the HVAC system is a system (412) for transferring heat between a first fluid and a second fluid, and
wherein a first measured quantity is a temperature of the first fluid at the inlet of the HVAC system (412), and a second measured quantity is a temperature of the second fluid at the inlet of the HVAC system (412).

8. Device (14) according to claim 7, wherein the heat transfer system (412) comprises:
- a first inlet opening (20) for the first fluid and a first outlet opening (22) for the first fluid,
- a second inlet opening (420) for the second fluid and a second outlet opening (422) for the second fluid,
- a first pump (41) capable of circulating the first fluid between the first inlet opening (20) and the first outlet opening (22),
- a second pump (441) capable of circulating the second fluid between the second inlet opening (420) and the second outlet opening (422), and
- a compressor (26), a condenser (C), an expansion valve (28) and an evaporator (E) which are connected in series and in a loop, and
wherein each representative parameter is selected from the group consisting of:
a pressure of the refrigerant in the gaseous state at the inlet of the compressor (26); a pressure of the refrigerant in the gaseous state at the outlet of the compressor (26); a temperature of the refrigerant in the gaseous state at the outlet of the compressor (26); a temperature difference equal to a suction temperature of the compressor (26) minus a saturation temperature at the inlet of the compressor (26); a temperature difference equal to a saturation temperature at the outlet of the compressor (26) minus a temperature at the outlet of the condenser (C); a variation in the temperature of the first fluid to be treated between the first inlet opening (20) and the first outlet opening (22); a variation in the temperature of the second fluid to be treated between the second inlet opening (420) and the second outlet opening (422); an electrical consumption of the compressor (26); an electrical consumption of the first pump (41); an electrical consumption of the second pump (441); a flow rate of the first fluid; a flow rate of the second fluid; a period of full-speed operation of the system (12) and the number of start-ups of the system (12).

9. Device (14) according to any of the preceding claims, wherein the neural network (84) is a supervised learning network such as a multi-layer perceptron network.

10. Assembly (10) comprising an HVAC system (12; 212; 312°; 412) and a device (14) for monitoring the operation of said system (12; 212; 312°; 412), **characterised in that** the monitoring device (14) is in accordance with any of the preceding claims.

11. Method for monitoring the operation of an HVAC system (12; 212; 312; 412), the method comprising the following steps:
- acquiring (120) values of measured quantities associated with the HVAC system (12; 212; 312°; 412), and
- estimating (130), depending on the acquired values of the measured quantities and using a neural network (84), the value of at least one parameter which is representative of the operation of the HVAC system (12; 212; 312°; 412), each measured quantity being an input variable (92) of the neural network and each representative parameter being an output variable (94) of the neural network,
- performing diagnostics (160) on the HVAC system (12; 212; 312°; 412), during which the probabilities of faults in the HVAC system (12; 212; 312°; 412) are calculated using a Bayesian network, the faults being predefined, each input variable of the Bayesian network being associated with a relevant representative parameter and each probability of a relevant fault being an output variable of the Bayesian network,
- acquiring (140) a measured value of each parameter which is representative of the operation of the HVAC system (12; 212; 312°; 412), and
- comparing (150), for each representative parameter, the measured value with the estimated value,
the input values of the Bayesian network corresponding to the result of the comparison, for each representative value, between its measured value and its estimated value.

12. Computer program product comprising software instructions which, when they are executed by a computer, carry out a method according to claim 11.
